(19) **Europäisches Patentamt / European Patent Office / Office européen des brevets**

(11) **EP 4 494 997 A1**

(12) **EUROPEAN PATENT APPLICATION**
published in accordance with Art. 153(4) EPC

(43) Date of publication:
**22.01.2025 Bulletin 2025/04**

(21) Application number: **23770596.7**

(22) Date of filing: **08.03.2023**

(51) International Patent Classification (IPC):
*B63B 79/40* (2020.01)  *B63B 49/00* (2006.01)
*B63B 79/10* (2020.01)  *B63H 25/02* (2006.01)
*B63H 25/04* (2006.01)  *G01S 17/93* (2020.01)

(52) Cooperative Patent Classification (CPC):
**B63B 49/00; B63B 79/10; B63B 79/40;**
**B63H 25/02; B63H 25/04; G01S 17/93**

(86) International application number:
**PCT/JP2023/008842**

(87) International publication number:
**WO 2023/176640 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2022  JP 2022040128**

(71) Applicants:
• **Pioneer Corporation**
**Tokyo 113-0021 (JP)**
• **Pioneer Smart Sensing Innovations Corporation**
**Tokyo 113-0021 (JP)**

(72) Inventors:
• **KATO, Masahiro**
**Kawagoe-shi, Saitama 350-8555 (JP)**
• **MATSUZAKI, Shin**
**Kawagoe-shi, Saitama 350-8555 (JP)**
• **KATO, Masahiro**
**Kawagoe-shi, Saitama 350-8555 (JP)**

(74) Representative: **Viering, Jentschura & Partner mbB**
**Patent- und Rechtsanwälte**
**Am Brauhaus 8**
**01099 Dresden (DE)**

(54) **INFORMATION PROCESSING DEVICE, CONTROL METHOD, PROGRAM, AND STORAGE MEDIUM**

(57)     The information processing device comprises: an acquisition means, a nearest neighbor point extraction means, and a reference point setting means. The acquisition means acquires measurement data which is a set of data specified by a pair of an index representing a position in a horizontal direction and an index representing a position in a vertical direction generated by a measurement device installed on a ship. The nearest neighbor point extraction means extracts the data representing a nearest neighbor point which is nearest to a reference point of the ship, from the data representing measured points of a berthing place, for each index representing the position in a horizontal direction. The reference point setting means sets the reference point at a next processing time, based on the nearest neighbor points.

FIG. 3

**Description**

TECHNICAL FIELD

The present disclosure relates to processing when a ship is berthed.

BACKGROUND ART

Conventionally, there is known a technology which supports berthing of a ship. For example, Patent Document 1 discloses a technique for controlling to change the attitude of the ship so that the light irradiated from the lidar and then reflected by the object around the berthing position can be received by the lidar, in the automatic berthing device for performing automatic berthing of a ship.

RELATED ART DOCUMENT

PATENT DOCUMENT

Patent Document 1: Japanese Patent Application Laid-Open under No. 2020-59403

SUMMARY OF THE INVENTION

PROBLEM TO BE SOLVED BY THE INVENTION

For ships, it is important to berth safely and smoothly to a berthing place, and it is particularly desired to realize a berthing support system for ship steering support and automatic operation. Therefore, in a berthing support system, it is necessary to calculate parameters such as distance, speed and angle with respect to a berthing place with high accuracy.
The present disclosure has been made in order to solve the problems as described above, and its main object is to provide an information processing device capable of calculating parameters used in berthing support with high accuracy.

MEANS FOR SOLVING THE PROBLEM

An invention described in claim is an information processing device comprising: an acquisition means configured to acquire measurement data which is a set of data specified by a pair of an index representing a position in a horizontal direction and an index representing a position in a vertical direction generated by a measurement device installed on a ship; a nearest neighbor point extraction means configured to extract the data representing a nearest neighbor point which is nearest to a reference point of the ship, from the data representing measured points of a berthing place, for each index representing the position in a horizontal direction; and a reference point setting means configured to set the reference point at a next processing time, based on the nearest neighbor points.
An invention described in claim is a control method executed by a computer, comprising: acquiring measurement data which is a set of data specified by a pair of an index representing a position in a horizontal direction and an index representing a position in a vertical direction generated by a measurement device installed on a ship; extracting the data representing a nearest neighbor point which is nearest to a reference point of the ship, from the data representing measured points of a berthing place, for each index representing the position in a horizontal direction; and setting the reference point at a next processing time, based on the nearest neighbor points.
An invention described in claim is a program causing a computer to execute processing of: acquiring measurement data which is a set of data specified by a pair of an index representing a position in a horizontal direction and an index representing a position in a vertical direction generated by a measurement device installed on a ship; extracting the data representing a nearest neighbor point which is nearest to a reference point of the ship, from the data representing measured points of a berthing place, for each index representing the position in a horizontal direction; and setting the reference point at a next processing time, based on the nearest neighbor points.

BRIEF DESCRIPTION OF THE DRAWINGS

[FIG. 1A] FIG. 1A is a block diagram of an operation support system.
[FIG. 1B] FIG. 1B is a top view showing a ship and field of view ranges of lidars included in the operation support system.

**EP 4 494 997 A1**

[FIG. 1C] FIG. 1C is a view showing a ship and field of view ranges of lidars from the rear.

[FIG. 2] FIG. 2 is a block diagram showing an example of a hardware configuration of an information processing device.

[FIG. 3] FIG. 3 is a functional block diagram related to berthing support processing.

[FIG. 4A] FIG. 4A shows a view in which the lidar is capturing a quay to be berthed.

[FIG. 4B] FIG. 4B is a perspective view of the quay showing measured points and a nearest neighbor point for each vertical line on the quay, which is the berthing place measured by the lidar.

[FIG. 5A] FIG. 5A shows an example of a data structure of reliability information.

[FIG. 5B] FIG. 5B is a diagram showing an example of the indexes and reliability included in the reliability information.

[FIG. 5C] FIG. 5C is a bird's-eye view showing a target ship and the berthing place, with the indexes shown in FIG. 5B.

[FIG. 6A] FIG. 6A is a diagram showing an example of a ship coordinate system based on a hull of the target ship.

[FIG. 6B] FIG. 6B is a perspective view of a structure showing normal vectors.

[FIG. 7A] FIG. 7A shows nearest neighbor points acquired as a berthing place edge point cloud SP of the berthing place.

[FIG. 7B] FIG. 7B is a diagram showing a unit vector $u_L$ for calculation of a distance $d_q$.

[FIG. 8] FIG. 8 shows an outline of processing according to setting of a reference point of the ship in the first embodiment.

[FIG. 9A] FIG. 9A shows an example of the case where an object on the water surface is erroneously extracted as the nearest neighbor point.

[FIG. 9B] FIG. 9B shows an example of the case where an object having a height with respect to the upper surface of the berthing place is erroneously extracted as the nearest neighbor point.

[FIG. 9C] FIG. 9C is a diagram showing an example of the case where an appropriate nearest neighbor point can be extracted when the distance from the ship to the berthing place is long.

[FIG. 9D] FIG. 9D is a diagram showing an example of the case where an appropriate nearest neighbor point can be extracted when the distance from the ship to the berthing place is very close.

[FIG. 9E] FIG. 9E shows an example of the case where an object on the water surface is erroneously extracted as the nearest neighbor point.

[FIG. 9F] FIG. 9F shows an example of extracting the nearest neighbor point when the installed position of the lidar is set as a reference point R.

[FIG. 10A] FIG. 10A is a flowchart showing an outline of berthing support processing in the first embodiment.

[FIG. 10B] FIG. 10B is a flowchart showing an example of a process of setting the reference point.

[FIG. 11A] FIG. 11A shows an example of a situation to which a second embodiment can be applied.

[FIG. 11B] FIG. 11B is a top view illustrating a ship and field of view ranges of lidars included in the operation support system.

[FIG. 12] FIG. 12 is a diagram showing an outline of a process of extracting a nearest neighbor point MPA.

[FIG. 13A] FIG. 13A is a diagram showing an example of the nearest neighbor points MPA extracted by the process shown in FIG. 12.

[FIG. 13B] FIG. 13B is a top view showing a berthing side straight line L and an extraction window EWA.

[FIG. 14] FIG. 14 is a diagram showing an outline of a process of extracting a nearest neighbor point MPB.

[FIG. 15A] FIG. 15A shows an example of the nearest neighbor point MPB extracted by the process shown in FIG. 14.

[FIG. 15B] FIG. 15B is a top view showing the extraction window EWB.

[FIG. 16A] FIG. 16A is a top view showing an origin O, the berthing side straight line L, the nearest neighbor points KP, and the distance $d_f$.

[FIG. 16B] FIG. 16B shows a unit vector u used for the search of the nearest neighbor point KP.

[FIG. 17] FIG. 17 is a flowchart showing an outline of the berthing support processing in the second embodiment.

[FIG. 18] FIG. 18 is a top view showing a marker straight line Lm.

[FIG. 19A] FIG. 19A is a diagram showing an example of the case where a plurality of fenders of different sizes are provided outside the field of view range of the lidar.

[FIG. 19B] FIG. 19B is a top view showing a difference $\Delta d_{rf}$.

[FIG. 19C] FIG. 19C is a diagram showing a temporal change of the difference value $\Delta d_{rf}$ and a difference value $\Delta d_{rf\_max}$.

[FIG. 19D] FIG. 19D is a flowchart showing an example of processing of calculating a shortest distance from the ship to the fender.

[FIG. 19E] FIG. 19E is a top view showing a distance $d_{f\_min}$.

MODES FOR EXERCISING THE INVENTION

According to one aspect of the present invention, there is provided an information processing device comprising:

an acquisition means configured to acquire measurement data which is a set of data specified by a pair of an index representing a position in a horizontal direction and an index representing a position in a vertical direction generated by a measurement device installed on a ship; a nearest neighbor point extraction means configured to extract the data representing a nearest neighbor point which is nearest to a reference point of the ship, from the data representing measured points of a berthing place, for each index representing the position in a horizontal direction; and a reference point setting means configured to set the reference point at a next processing time, based on the nearest neighbor points.

The information processing device comprises an acquisition means, a nearest neighbor point extraction means, and a reference point setting means. The acquisition means acquires measurement data which is a set of data specified by a pair of an index representing a position in a horizontal direction and an index representing a position in a vertical direction generated by a measurement device installed on a ship. The nearest neighbor point extraction means extracts the data representing a nearest neighbor point which is nearest to a reference point of the ship, from the data representing measured points of a berthing place, for each index representing the position in a horizontal direction. The reference point setting means sets the reference point at a next processing time, based on the nearest neighbor points. Thus, the parameters used in the berthing support can be calculated with high accuracy.

According to one mode of the above information processing device, the reference point setting means sets the reference point based on reliability of the nearest neighbor point.

According to another mode of the above information processing device, the reference point setting means sets a position on the ship where the measurement device is installed, as the reference point, when the reliability of the nearest neighbor point is equal to or lower than a predetermined value.

According to still another mode of the above information processing device, the reference point setting means sets the reference point to a higher or lower position than the position where the measurement device is installed, according to a distance between the ship and the berthing place, when the reliability of the nearest neighbor point is higher than a predetermined value.

According to still another mode of the above information processing device, the reference point setting means sets, as the reference point, a first reference point used for extraction of the data representing the nearest neighbor point and a second reference point used for extraction of the data representing a measured point of a fender provided at the berthing place, when the reliability of the nearest neighbor point is higher than a predetermined value.

According to still another mode of the above information processing device, the reference point setting means sets the first reference point to have a large elevation angle when viewed from a quay, and sets the second reference point to have a small elevation angle when viewed from the quay.

According to still another mode, the above information processing device further comprises a quay distance calculation means configured to calculate a quay distance corresponding to a distance from the ship to the berthing place, based on a search result of the nearest neighbor point using the first reference point.

According to still another mode, the information processing device further comprises a fender distance calculation means configured to calculate a fender distance corresponding to a distance from the ship to the fender, based on a search result of the nearest neighbor point using the second reference point.

According to still another mode of the above information processing device, the fender distance calculation means calculates an overhang length which is a maximum value of a difference value between the quay distance calculated within a predetermined time and the fender distance, and calculates the fender distance by subtracting the overhang length from the quay distance.

According to another aspect of the present invention, there is provided a control method executed by a computer, comprising: acquiring measurement data which is a set of data specified by a pair of an index representing a position in a horizontal direction and an index representing a position in a vertical direction generated by a measurement device installed on a ship; extracting the data representing a nearest neighbor point which is nearest to a reference point of the ship, from the data representing measured points of a berthing place, for each index representing the position in a horizontal direction; and setting the reference point at a next processing time, based on the nearest neighbor points. Thus, the parameters used in the berthing support can be calculated with high accuracy.

According to still another aspect of the present invention, there is provided a program causing a computer to execute processing of: acquiring measurement data which is a set of data specified by a pair of an index representing a position in a horizontal direction and an index representing a position in a vertical direction generated by a measurement device installed on a ship; extracting the data representing a nearest neighbor point which is nearest to a reference point of the ship, from the data representing measured points of a berthing place, for each index representing the position in a horizontal direction; and setting the reference point at a next processing time, based on the nearest neighbor points. By executing the program on a computer, the above-described information processing device can be realized. The program can be stored on a storage medium for use.

EMBODIMENT

A preferred embodiment of the present invention will be described below with reference to the attached drawings.

<First Embodiment>

First, a first embodiment will be described below.

[Outline of operation support system]

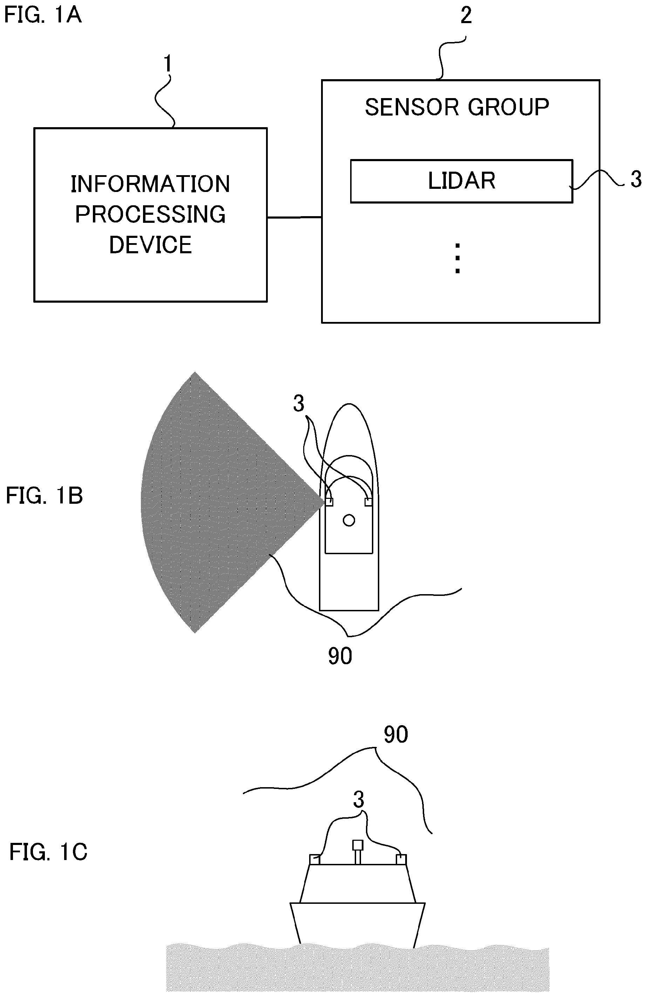

FIGS. 1A to 1C show a schematic configuration of an operation support system according to the present embodiment. Specifically, FIG. 1A shows a block configuration diagram of the operation support system, FIG. 1B is a top view illustrating a ship and field of view ranges (also referred to as a "measurement range" or "distance measurable range") 90 of the lidars 3 included in the operation support system described later, and FIG. 1C is a view illustrating the ship and the field of view ranges 90 of the lidars 3 from the rear. The operation support system includes an information processing device 1 which moves together with a ship that is a mobile body, and a sensor group 2 mounted on the ship. Hereafter, the ship equipped with the operation support system is also called a "target ship".

The information processing device 1 is electrically connected to the sensor group 2, and supports the operation of the target ship based on the outputs of various sensors included in the sensor group 2. The operation support includes berthing support such as automatic berthing. Here, "berthing" includes not only the case of docking the target ship to the quay but also the case of docking the target ship to a structural body such as a pier. In the following, the term "berthing place" shall mean a generic term for structures such as a quay, a pier, or the like that are subject to berthing. The information processing device 1 may be a navigation device provided on a ship or an electronic control device built in a ship.

The sensor group 2 includes various external and internal sensors provided on the ship. In the present embodiment, the sensor group 2 includes, for example, a lidar (Lidar: Light Detection and Ranging, or Laser Illuminated Detection And Ranging) 3.

The lidar 3 is an external sensor, which discretely measures the distance to the object existing in the outside by emitting a pulse laser for a predetermined angle range in the horizontal direction (see FIG. 1B) and a predetermined angle range in the vertical direction (see FIG. 1C), and generates a three-dimensional point cloud data indicating the position of the object. In the example of FIGS. 1B and 1C, the lidars 3 directed toward the port side and the starboard side of the ship are respectively provided on the ship. The arrangement of the lidars 3 is not limited to the example of FIGS. 1B and 1C. For example, the target ship may have a plurality of lidars 3 (e.g., lidars provided at the front and rear of the target ship) for measuring the same side directions so that a plurality of measurement data of the berthing place can be obtained at the same time at the time of berthing. Further, the number of lidars 3 installed in the target ship is not limited to two, but may be one, three or more.

The lidar 3 has an irradiation unit for irradiating a laser beam while changing the irradiation direction, a light receiving unit for receiving the reflected light of the irradiated laser beam (scattered light), and an output unit for outputting a scan data based on the light receiving signal output by the light receiving unit. The data measured for each irradiation direction of the laser beam (scanning position) is generated based on the irradiation direction corresponding to the laser beam received by the light receiving unit and the response delay time of the laser beam identified based on the received light signal described above. Hereafter, the point measured by irradiating the laser beam within the measurement range of the lidar 3 or the measurement data thereof is referred to as a "measured point".

Here, the point cloud data can be regarded as an image (frame) representing each measurement direction by a pixel and representing the measurement distance and the reflection intensity value in each measurement direction by pixel values. In this case, the emission direction of the laser beam (i.e. the measurement direction) in the elevation angle is different in the vertical direction of the pixels, and the emission direction of the laser beam in the horizontal angle is different in the horizontal direction of the pixels. Hereafter, the measured points corresponding to the alignment of pixels (i.e., vertical alignment) for which the position of the index in the horizontal direction coincide when the point cloud data is regarded as an image is referred to as a "vertical line". In addition, the index in the horizontal direction when the point cloud data is regarded as an image is called a "horizontal number", and the index in the vertical direction is called a "vertical number".

Incidentally, the lidar 3 is not limited to the above-described scan type lidar. The lidar 3 may be a flash type lidar for generating three-dimensional data by diffusing and irradiating a laser beam to the field of view of the two-dimensional array-shaped sensor. The lidar 3 is an example of a "measurement device" in the present invention.

[Configuration of the information processing device]

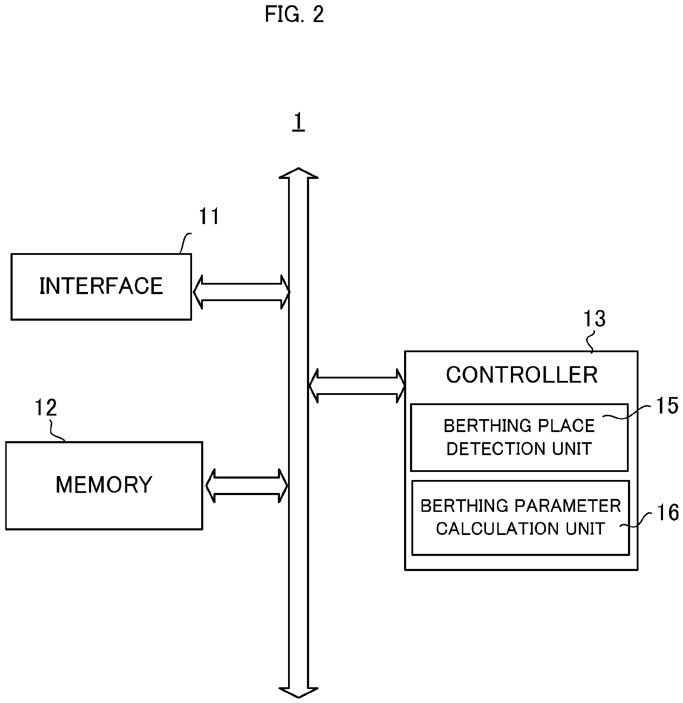

FIG. 2 is a block diagram illustrating an example of a hardware configuration of an information processing device.

The information processing device 1 mainly includes an interface 11, a memory 12, and a controller 13. Each of these elements is connected to each other through a bus line.

The interface 11 performs the interface operation related to the transfer of data between the information processing device 1 and the external devices. In the present embodiment, the interface 11 acquires output data from the sensors of the sensor group 2 and supplies them to the controller 13. Further, for example, the interface 11 supplies signals for the control of the target ship generated by the controller 13 to each component of the target ship to control the operation of the target ship. For example, the target ship includes a driving source such as an engine or an electric motor, a screw for generating a propulsive force in the traveling direction based on the driving force of the driving source, a thruster for generating a lateral propulsive force based on the driving force of the driving source, and a rudder or the like which is a mechanism for freely determining the traveling direction of the ship. Then, during automatic operation such as automatic berthing, the interface 11 supplies the control signals generated by the controller 13 to these components. In the case where an electronic control device is provided in the target ship, the interface 11 supplies the control signal generated by the controller 13 to the electronic control device. The interface 11 may be a wireless interface such as a network adapter for performing wireless communication, or a hardware interface for connecting to an external device by a cable or the like. Also, the interface 11 may perform interface operation with various peripheral devices such as an input device, a display device, a sound output device, and the like.

The memory 12 may be constituted by various volatile and non-volatile memories such as a RAM (Random Access Memory), a ROM (Read Only Memory), a hard disk drive, a flash memory, and the like. The memory 12 stores programs for the controller 13 to perform predetermined processes. The programs executed by the controller 13 may be stored in a storage medium other than the memory 12.

In addition, the memory 12 stores information necessary for the processing performed by the information processing device 1 in the present embodiment. For example, the memory 12 may store map data including information about the positions of the berthing places. In another example, the memory 12 stores information about the size of the down-sampling when down-sampling is performed on the point cloud data obtained when the lidar 3 performs scanning for one period.

The controller 13 includes one or more processors such as a CPU (Central Processing Unit), a GPU (Graphics Processing Unit), and a TPU (Tensor Processing Unit), and controls the entire information processing device 1. In this case, the controller 13 performs processing for the operation support or the like of the target ship by executing the programs stored in the memory 12 or the like.

The controller 13 functionally includes a berthing place detection unit 15 and a berthing parameter calculation unit 16. The berthing place detection unit 15 performs processing for the detection of the berthing place based on the point cloud data output by the lidar 3. The berthing parameter calculation unit 16 calculates parameters (also referred to as "berthing parameters") necessary for berthing to the berthing place. Here, the berthing parameters include a distance between the target ship and the berthing place (a quay distance), an approach angle of the target ship to the berthing place, a speed at which the target ship approaches the berthing place (a berthing speed), etc. Further, the berthing parameter calculation unit 16 calculates information (also referred to as "reliability information") indicating the reliability of the berthing to the berthing place based on the processing result of the berthing place detection unit 15 and the berthing parameters. The controller 13 functions as "an acquisition means", "a nearest neighbor point extraction means", "a reference point setting means", and a computer for executing a program.

The processing performed by the controller 13 is not limited to being implemented in software by a program, but may be implemented by any combination of hardware, firmware, and software. The processing performed by the controller 13 may also be implemented using user programmable integrated circuitry such as, for example, a FPGA (Field-Programmable Gate Array) or a microcomputer. In this case, the integrated circuit may be used to implement a program that the controller 13 executes in this example.

[Outline of berthing support processing]

Next, an outline of the berthing support processing executed by the information processing device 1 will be described. The information processing device 1 generates a straight line along the side surface of the berthing place (hereinafter also referred to as "berthing side straight line L") based on the point cloud data of the lidar 3 measured in the direction in which the berthing place is present. In other words, the berthing side straight line L is a straight line along the side surface of the quay at the berthing place. Then, the information processing device 1 calculates the berthing parameters such as the quay distance based on the berthing side straight line L.

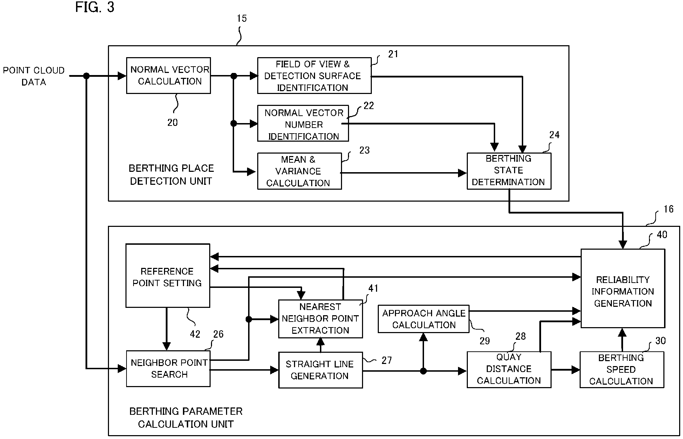

FIG. 3 is a functional block diagram of the berthing place detection unit 15 and the berthing parameter calculation unit 16 related to the berthing support processing. The berthing place detection unit 15 functionally includes a normal vector calculation block 20, a field of view and detection surface identification block 21, a normal vector number identification block 22, a mean and variance calculation block 23, and a berthing state determination block 24. The berthing parameter calculation unit 16 functionally includes a neighbor point search block 26, a straight line generation block 27, a quay distance calculation block 28, an approach angle calculation block 29, a berthing speed calculation block 30, a reliability information generation block 40, a nearest neighbor point extraction block 41, and a reference point setting block 42.

The normal vector calculation block 20 calculates normal vectors of a surface (also referred to as a "quay-facing surface") formed by the berthing place based on the point cloud data that the lidar 3 generates in the direction in which the berthing place exists. In this case, the normal vector calculation block 20 calculates the normal vectors described above based on the point cloud data generated by the lidar 3 whose measurement range includes the side of the berthing place of the target ship, for example. The information about the measurement range of the lidar 3 and the direction of the berthing place may be registered in advance in the memory 12, for example.

In this case, the normal vector calculation block 20 preferably performs down-sampling of the point cloud data and removal of the data obtained by the reflection of the laser beam by the water surface (also referred to as "water surface reflection data"), respectively.

In this case, first, the normal vector calculation block 20 removes, from the point cloud data generated by the lidar 3, the data existing below the water surface position as the water surface reflection data (i.e., erroneous detection data). Incidentally, the normal vector calculation block 20 estimates the water surface position based on the mean value in the height direction of the point cloud data generated by the lidar 3 when there is no object other than the water surface in the vicinity, for example. Then, the normal vector calculation block 20 performs down-sampling, which is a process of integrating the measured points into each grid space of a predetermined size, for the point cloud data obtained after removing the water surface reflection data. Then, the normal vector calculation block 20 calculates the normal vectors using a plurality of measured points in the periphery for each measured point indicated by the point cloud data after the down-sampling. Note that the down-sampling may be performed before the removal of the water surface reflection data.

The field of view and detection surface identification block 21 identifies the surface of the berthing place existing within the viewing angle of the lidar 3 (also referred to as "surface within field of view") and the surface of the berthing place detected based on the normal vectors calculated by the normal vector calculation block 20 (also referred to as "detection surface"). In this case, the field of view and detection surface identification block 21 determines whether or not the upper surface or/and the side surface of the berthing place is included as the surface within field of view and the detection surface.

The normal vector number identification block 22 extracts the normal vectors in the vertical direction and the normal vectors in the direction perpendicular thereto (i.e., the horizontal direction) from among the normal vectors calculated by the normal vector calculation block 20, respectively, and calculates the number of the normal vectors in the vertical direction and the number of the normal vectors in the horizontal direction. Here, the normal vector number identification block 22 regards the normal vector in the vertical direction as representing the normal to the measured point on the upper surface of the berthing place and regards the normal vector in the horizontal direction as representing the normal to the measured point on the side surface of the berthing place, and calculates each number of the normal vectors as one index of the reliability regarding the berthing place.

The mean and variance calculation block 23 extracts the normal vectors in the vertical direction and the normal vectors in the direction perpendicular thereto (i.e., the horizontal direction) from among the normal vectors calculated by the normal vector calculation block 20, and calculates the mean and variance of the normal vectors in the vertical direction and the mean and variance of the normal vectors in the horizontal direction.

The berthing state determination block 24 acquires the processing results of the field of view and detection surface identification block 21, the normal vector number identification block 22, and the mean and variance calculation block 23, which are identified or calculated based on the same point cloud data, as the determination results representing the detection state of the berthing place at the time of generating the point cloud data. The berthing state determination block 24 supplies the processing results of the field of view and detection surface identification block 21, the normal vector number identification block 22, and the mean and variance calculation block 23 to the berthing parameter calculation unit 16 as the determination results of the detection state of the berthing place.

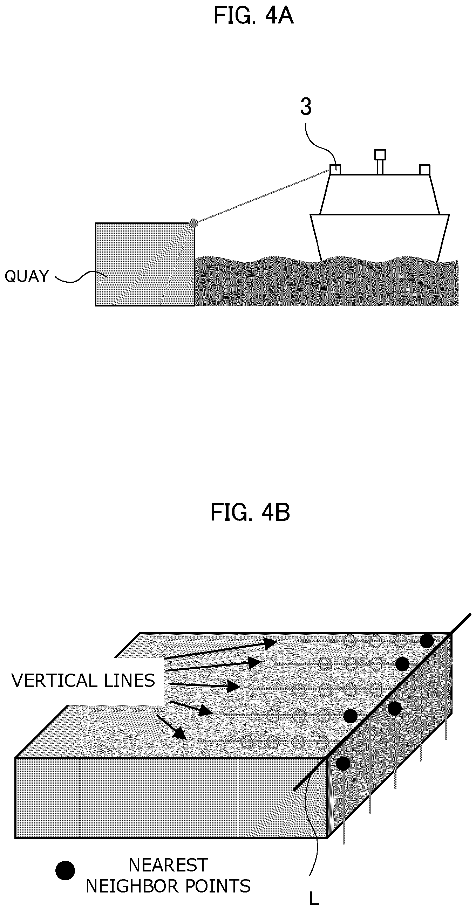

The neighbor point search block 26 performs a process of searching for the nearest neighbor point closest to the reference point for each vertical line on the basis of the measured points constituting the point cloud data and the reference point set by the reference point setting block 42. For example, as shown in FIG. 4A, when the lidar 3 captures a quay to be berthed, the nearest neighbor point, which is the closest point to the ship, becomes the edged portion between the upper surface and the side surface of the quay.

The straight line generation block 27 generates the berthing side straight line L which is a straight line along the side surface of the berthing place based on the nearest neighbor points determined by the neighbor point search block 26.

The nearest neighbor point extraction block 41 performs a process of extracting one nearest neighbor point for which the distance from the reference point to the berthing side straight line L is the shortest, from among the nearest neighbor points, based on the nearest neighbor point of each vertical line searched by the neighbor point search block 26, the berthing side straight line L generated by the straight line generation block 27, and the reference point set by the reference point setting block 42.

The quay distance calculation block 28 calculates the quay distance corresponding to the shortest distance between the target ship and the berthing place based on the berthing side straight line L generated by the straight line generation block 27. Here, when there are a plurality of lidars 3 capable of measuring the berthing place, the quay distance calculation block 28 collects the point cloud data of the plurality of lidars 3 to generate the berthing side straight line L, and calculates the shortest distance with each lidar 3 as the quay distance. Alternatively, the quay distance calculation block 28 may generate the berthing side straight line L for each point cloud data of the lidar 3, and calculate the shortest distance between each berthing side straight line L and each lidar 3 as the quay distance. The quay distance calculation block 28 may calculate the shortest distance from a reference point such as the center position of the ship to the berthing side straight line L as the quay distance. Incidentally, instead of regarding the shortest distance for each lidar 3 as the quay distance, the quay distance calculation block 28 may determine the shortest one of shortest distances for the lidars 3 as the quay distance, and may determine the mean of these shortest distances as the quay distance. Further, the quay distance calculation block 28 may determine the distance to the fender installed on the quay as the quay distance when it can calculate the distance to the quay.

The approach angle calculation block 29 calculates the approach angle of the target ship with respect to the berthing place based on the berthing side straight line L generated by the straight line generation block 27. Specifically, the approach angle calculation block 29 calculates the approach angle using "atan2" which is a function to obtain the arctangent from two arguments defining the tangent. More specifically, the approach angle calculation block 29 calculates the approach angle by calculating the function atan2 from the directional vector of the berthing side straight line L.

The berthing speed calculation block 30 calculates the berthing speed at which the target ship approaches the berthing place, based on the quay distance calculated by the quay distance calculation block 28. For example, the berthing speed calculation block 30 calculates the time change of the quay distance (the shortest distance) as the berthing speed.

The reliability information generation block 40 generates the reliability information on the basis of the processing results of the berthing state determination block 24, the neighbor point search block 26, the straight line generation block 27, the quay distance calculation block 28, and the approach angle calculation block 29.

Here, a description will be given of a first specific example of generating the reliability information. The reliability information generation block 40 generates a flag for each element such as the viewing angle at the time of detection of the berthing place, the surface detection of the berthing place, the number and variance of the normal vectors, and generates a vector of the generated flags as the reliability information. Hereafter, it is assumed that the reliability of the corresponding element is higher than a predetermined value when the flag is "1" and the reliability of the corresponding element is lower than the predetermined value when the flag is "0".

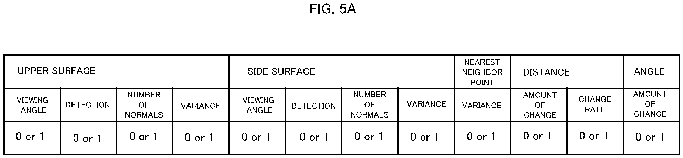

FIG. 5A is a diagram illustrating an example of the data structure of the reliability information generated by the reliability information generation block 40. As shown in FIG. 5A, the reliability information has items of "top surface", "side surface", "nearest neighbor point", "distance", and "angle". In addition, the item "top surface" has sub-items "viewing angle", "detection", "number of normals", and "variance". The item "side surface" has sub-items "viewing angle", "detection", "number of normals", and "variance". The item "nearest neighbor point" has a sub-item "variance". The item "distance" has a sub-item "amount of change" and "change rate", and the item "angle" has a sub-item "amount of change".

Here, the reliability information generation block 40 registers, in the sub-item "viewing angle" of the item "upper surface", a flag "1" when the upper surface of the berthing place is within the range of the viewing angle and a flag "0" when the upper surface is out of the viewing angle. The reliability information generation block 40 registers, in the sub item "detection" of the item "upper surface", a flag "1" when the upper surface of the berthing place is the detection surface and a flag "0" when the upper surface is not the detection surface. Further, the reliability information generation block 40 registers, in the sub-item "number of normals" of the item "upper surface", a flag "1" when the number of normal vectors with respect to the upper surface of the berthing place is equal to or larger than a predetermined threshold value (for example, 10) and "0" when the number of normal vectors is smaller than the threshold value. Further, the reliability information generation block 40 registers, in the sub-item "variance" of the item "upper surface", a flag "1" when the variance of x,y,z component of the normal vector with respect to the upper surface of the berthing place is smaller than a predetermined threshold value (for example, 1.0) and a flag "0" when any of the variances is equal to or larger than the threshold value. Further, the reliability information generation block 40 registers, in each sub-item of the item "side surface", the flags defined by the same rules as the sub-items of the item "upper surface".

Further, the reliability information generation block 40 registers, in the sub-item "variance" of the item "nearest neighbor point", a flag "1" when the variance of the nearest neighbor point searched for each vertical line by the neighbor point search block 26 is smaller than a predetermined threshold value (for example, 0.3) and a flag "0" when the variance is equal to or larger than the threshold value.

Further, the reliability information generation block 40 registers, in the sub-item "amount of change" of the item "distance", a flag "1" when the amount of change of the quay distance calculated by the quay distance calculation block 28 from one time point before is smaller than a predetermined threshold value (e.g., 1.0m) and a flag "0" when the amount of change is equal to or larger than the threshold value . Further, the reliability information generation block 40 registers, in the sub-item "change rate" of the item "distance", a flag "1" when the change rate of the quay distance calculated by the quay distance calculation block 28 from one time point before is smaller than a predetermined threshold value (for example, $\pm$

10%) and a flag "0" when the change rate is equal to or larger than the threshold value. The reliability information generation block 40 registers, in the sub item "amount of change" of the item "angle", a flag "1" when the amount of change of the approach angle calculated by the approach angle calculation block 29 from one time point before is smaller than a predetermined threshold value (for example, 1.0 degrees) and a flag "0" when the amount of change is equal to or larger than the threshold value.

Incidentally, each of the threshold values described above is set to a suitable value previously stored in the memory 12 or the like, for example. Further, the reliability information may be generated for each lidar 3.

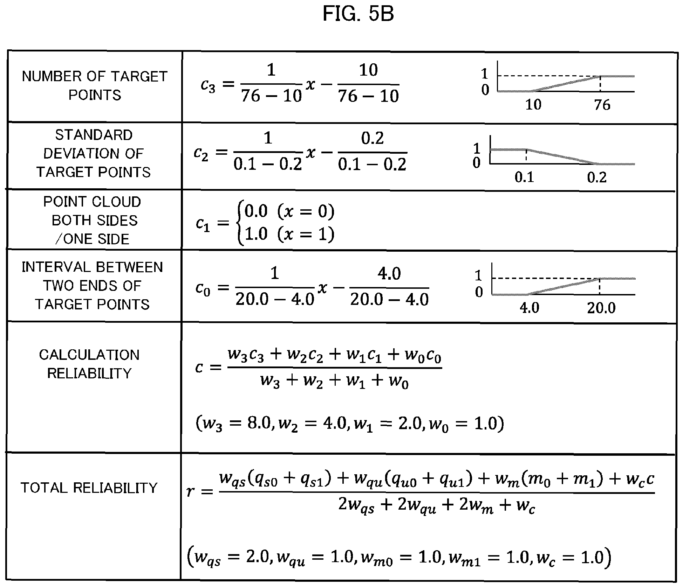

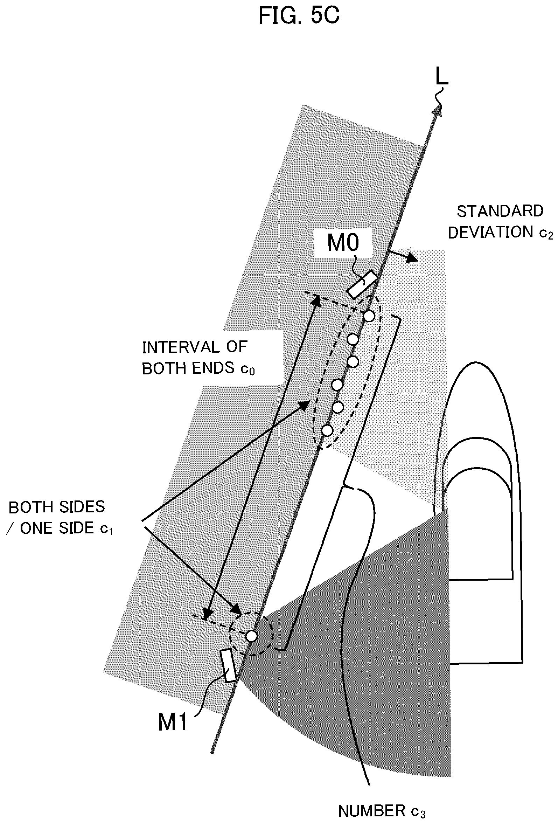

Next, a second specific example of the generation of the reliability information will be described. FIG. 5B shows an example of indexes and reliability included in the reliability information. FIG. 5C is a bird's-eye view of the target ship and the berthing place, on which the indexes shown in FIG. 5B are specified. Here, the quay which is the berthing place is provided with markers M0 and M1 which are reference objects of berthing. The information processing device 1 detects the markers M0 and M1 on the basis of the point cloud data of the lidar 3, and executes various processes such as the generation of the berthing side straight line L using the measured points (the set of the neighbor points) near the edge of the berthing place existing between the markers M0 and M1. Hereafter, the measured points near the edge of the berthing place that exist between the markers M0 and M1 are also referred to as "target points". Incidentally, when the markers M0 and M1 are not detected, it is assumed that all the set of the neighbor points is regarded as the target point, for example.

The index "$c_3$" is an index based on the number of the target points. Here, as an example, the index $c_3$ is represented by a linear function using the number of the target points as the variable x. The index "$c_2$" is an index based on the standard deviation of the target points. Here, as an example, the index $c_2$ is represented by a linear function using the standard deviation of the target points as the variable x. The index "$c_1$" is an index indicating whether or not two lidars 3 were able to measure both the front side and the rear side of the quay. Here, as an example, the index $c_1$ is set to "1.0" when both sides of the quay were measured, and is set to "0.0" when only one side was measured. The index "$c_0$" is an index based on the interval between the two ends of the target points (both ends along the berthing side straight line L), and is represented by a linear function using the above-described interval between the two ends as the variable x. The indexes $c_0$ to $c_3$ are calculated to be limited in a range from 0 to 1.

The calculation reliability "c" is reliability based on the indexes $c_0$ to $c_3$ described above. Here, the calculation reliability c is a weighted mean of the indexes $c_0$ to $c_3$ using the weighting factors "$w_0$" to "$w_3$" according to the importance with respect to the indexes $c_0$ to $c_3$. Further, an exemplary setting of the weighting factors $w_0$ to $w_3$ is shown. Since each index $c_0$ to $c_3$ is in the range from 0 to 1, the calculation reliability c, which is the weighted mean of them, is also calculated as a numerical value in the range from 0 to 1.

A total reliability "r" is reliability based on a side surface detection reliability "$q_s$" which is a reliability regarding detection of the side surface of the quay, a top detection reliability "$q_u$" which is a reliability regarding detection of the top surface of the quay, a marker detection reliability "$m_0$" regarding the detection of the marker M0, a marker detection reliability "$m_1$" regarding the detection of the marker M1, and the calculation reliability c. Here, the total reliability r is a weighted mean of the reliability $q_s$, $q_u$, $m_0$, $m_1$, c using the weighting factors "$w_{qs}$", "$w_{qu}$", "$w_{m0}$", "$w_{m1}$", "$w_c$" according to the importance with respect to the reliability $q_s$, $q_u$, $m_0$, $m_1$, c. Further, an exemplary setting of the weighting factors $w_{qs}$, $w_{qu}$, $w_{m0}$, $w_{m1}$, $w_c$ is shown. For example, the information processing device 1 may calculate the side surface detection reliability $q_s$ based on the item "side surface" of the reliability information shown in FIG. 5A, and calculate the top surface detection reliability $q_u$ based on the item "top surface" of the reliability information in FIG. 5A. Further, the information processing device 1 may calculate the marker detection reliability $m_0$ and $m_1$ based on the number of the measured points of the markers M0 and M1 in the point cloud data measured by each lidar 3, for example. The side surface detection reliability $q_s$, the top surface detection reliability $q_u$, the marker detection reliability $m_0$, and the marker detection reliability $m_1$ are calculated to be in the range from 0 to 1. In addition, when both the front part and the rear part of the quay are detected, the side surface detection reliability $q_{s0}$ of the front quay, the side surface detection reliability $q_{s1}$ of the rear quay, the top surface detection reliability $q_{u0}$ of the front quay, and the top surface detection reliability $q_{u1}$ of the rear quay are calculated. Since the side surface detection reliability $q_s$, the top surface detection reliability $q_u$, the marker detection reliability $m_0$, the marker detection reliability $m_1$, and the calculation reliability c are in the range from 0 to 1, the total reliability r, which is the weighted mean of them, is also calculated as a numerical value in the range from 0 to 1. Therefore, it can be seen that the closer the total reliability r is to 1, the higher the reliability of the calculated berthing parameters, and the closer the total reliability r is to 0, the lower the reliability of the calculated berthing parameters.

That is, the reliability information generated by the second specific example includes the indexes and reliability calculated by the above-described method.

The reference point setting block 42 performs a process of setting the reference point corresponding to the reference position of the ship used for processing by the neighbor point search block 26 and the nearest neighbor point extraction block 41 on the basis of the reliability information generated by the reliability information generation block 40 and the one nearest neighbor point extracted by the nearest neighbor point extraction block 41.

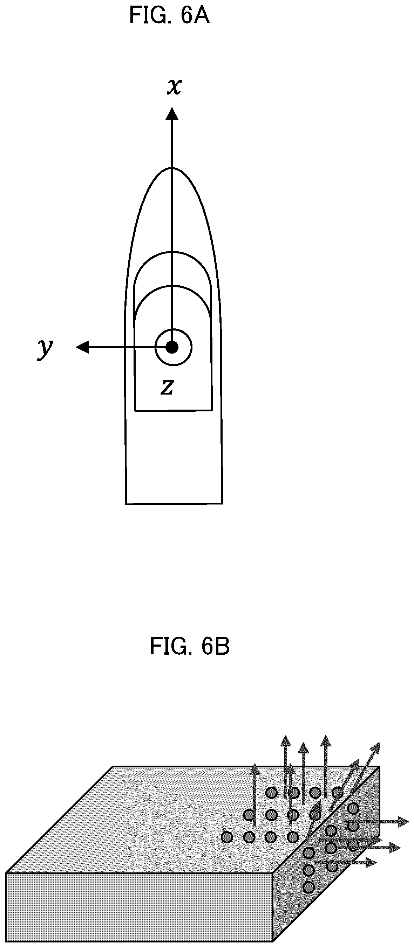

Next, a specific example of the processing by the normal vector calculation block 20, the normal vector number identification block 22, and the mean and variance calculation block 23 will be described with reference to FIGS. 6A and 6B.

FIG. 6A is a diagram showing an example of a ship coordinate system based on the hull of the target ship. As shown in FIG. 6A, here, the front (forward) direction of the target ship is defined as "x" coordinate, the side direction of the target ship is defined as "y" coordinate, and the height direction of the target ship is defined as "z" coordinate. The measurement data of the coordinate system based on the lidar 3, which is measured by the lidar 3, is transformed into the ship coordinate system shown in FIG. 6A. Incidentally, the processing of converting the point cloud data of the lidar-based coordinate system installed in the mobile body to the coordinate system of the mobile body is disclosed in the International Publication WO2019/188745, for example.

FIG. 6B is a perspective view of a berthing place (quay in this case) showing the measured points representing the measured position measured by the lidar 3 and the normal vectors calculated based on the measured points with respect to the quay. In FIG. 6B, the measured points are shown by dots, and the normal vectors are shown by arrows. FIG. 6B shows an example in which both the upper surface and the side surface of the quay could be measured by the lidar 3.

As shown in FIG. 6B, the normal vector calculation block 20 calculates the normal vectors for the measured points on the side surface and the upper surface of the quay. Since the normal vector is a vector perpendicular to the plane or curved surface of interest, the normal vector is calculated using a plurality of measured points that forms a plane. Therefore, the normal vector calculation block 20 sets a grid having a predetermined length in the vertical and horizontal directions or a circle having a radius of a predetermined length, and calculates the normal vector using the measured points existing therein. In this case, the normal vector calculation block 20 may calculate the normal vector for each measured point, or may calculate the normal vector for each predetermined interval. Then, the normal vector number identification block 22 determines the normal vector whose z component is larger than a predetermined threshold value as the normal vector oriented in the vertical direction. It is assumed that the normal vector is vectorized to be a unit vector. Further, the normal vector number identification block 22 determines the normal vector whose z component is smaller than the predetermined threshold value as the normal vector oriented in the horizontal direction. Then, the normal vector number identification block 22 identifies the number of normal vectors in the vertical direction (five in this case) and the number of the normal vectors in the horizontal direction (four in this case). Further, the mean and variance calculation block 23 calculates the mean and variance of the normal vectors in the vertical direction and the mean and variance of the normal vectors in the horizontal direction. It is noted that the normal vectors become oblique at the edge portion because the measured points around the edge portion exist on the upper and side surfaces.

[Method of setting and using the reference point]

Next, a description will be given of a method of setting and using the reference point in this embodiment. At the processing time t, the berthing parameter calculation unit 16 sets the position where the lidar 3 is installed as the reference point $R_t$. Further, the berthing parameter calculation unit 16 performs a process of searching for the nearest neighbor point closest to the reference point R for each vertical line on the basis of the measured points constituting the point cloud data generated by the lidar 3 at the processing time t, and the reference point R. According to such a process, the berthing parameter calculation unit 16 acquires the point cloud data (hereinafter, also referred to as "berthing place edge point cloud") including a plurality of measured points (the nearest neighbor points) forming the edge of the berthing place (specifically, the boundary of the upper surface and the side surface) at the processing time t as shown in FIG. 4B.

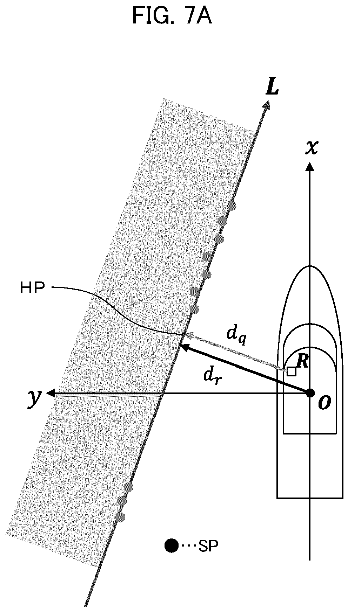

As shown in FIG. 7A, the berthing parameter calculation unit 16 generates the berthing side straight line L at the processing time t based on the berthing place edge point cloud SP acquired at the processing time t. For example, at the processing time t, the berthing parameter calculation unit 16 acquires the berthing place edge point cloud SP including the nearest neighbor points as shown in 7A by searching for the nearest neighbor point closest to the reference point for each vertical line on the basis of the measured points constituting the point cloud data obtained from the lidar 3 and the preset reference point. Then, the berthing parameter calculation unit 16 generates the berthing side straight line L by applying the principal component analysis or the least squares method to the berthing place edge point cloud SP acquired as described above.

The berthing parameter calculation unit 16 extracts one nearest neighbor point HP for which the distance from the reference point R to the berthing side straight line L on the horizontal plane (xy plane) is the shortest. Then, the berthing parameter calculation unit 16 calculates the distance from the reference point R to the nearest neighbor point HP on the horizontal plane (xy plane).

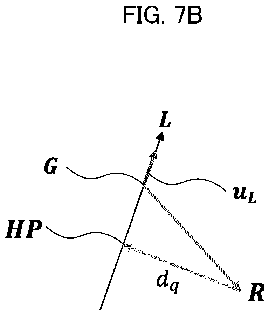

Here, assuming that the center of gravity of the measured points indicated by the berthing place edge point cloud SP is G, the vector HP-G and the unit vector $u_L$ of the berth side straight line L are parallel, as can be seen from FIG. 7B. Therefore, the relation of HP-G=au ("a" is a constant) is established. Therefore, the berthing parameter calculation unit 16 can calculate the coordinated position of the nearest neighbor point HP using the following Formula (1).

[Formula 1]

$$HP = G + \{(R - G) \cdot u_L\}u_L \qquad (1)$$

Further, the berthing parameter calculation unit 16 calculates the distance $d_q$ between the reference point R and the nearest neighbor point HP on the horizontal plane (xy plane) using the following Formula (2) (see. FIG. 7B). In the following Formula (2), $HP_x$ represents the x coordinate of the nearest neighbor point HP, $HP_y$ represents the y coordinate of the nearest neighbor point HP, $R_x$ represents the x coordinate of the reference point R, and $R_y$ represents the y coordinate of the reference point R. That is, the distance $d_q$ is calculated as a value corresponding to the distance between the ship and the berthing place. The berthing parameter calculation unit 16 subtracts the z coordinate value $HP_z$ of the nearest neighbor point HP from the z coordinate value $R_z$ of the reference point R to calculate the height h, which is the distance between the reference point R and the nearest neighbor point HP in the vertical direction (z direction). Incidentally, the berthing parameter calculation unit 16 calculates the quay distance $d_r$ as the distance from the origin O such as the center position of the ship to the berthing side straight line L. In that case, the quay distance $d_r$ may be calculated by using the coordinates of the origin O instead of the reference point R and using the above Formulas (1) and (2). Further, when calculating the quay distance $d_r$ using the origin O as the reference point R, the berthing parameter calculation unit 16 may use the distance $d_q$ as the quay distance $d_r$.

[Formula 2]

$$d_q = \sqrt{(HP_x - R_x)^2 + (HP_y - R_y)^2} \qquad (2)$$

The berthing parameter calculation unit 16 determines the height of the reliability of the measured points (the nearest neighbor points) included in the berthing place edge point cloud SP by referring to the flags registered in the sub-item "variance" of the items "nearest neighbor points" among the reliability information generated by the reliability information generation block 40.

When the flag registered in the sub-item "variance" of the item "nearest neighbor point" of the reliability information generated according to the above-described first specific example is "0", the berthing parameter calculation unit 16 determines that the reliability of the respective measured points (nearest neighbor points) included in the berthing place edge point cloud SP is equal to or lower than a predetermined value. Or, for example, when the total reliability r included in the reliability information generated according to the above-described second specific example is equal to or lower than 0.3, the berthing parameter calculation unit 16 determines that the reliability of the respective measured points (nearest neighbor points) included in the berthing place edge point cloud SP is equal to or lower than a predetermined value. When such a determination is made, the berthing parameter calculation unit 16 sets the coordinate position of the reference point R at the next processing time t+1 after the processing time t to the position where the lidar 3 is installed $[L_x \, L_y \, L_z]^T$.

When the flag registered in the sub-item "variance" of the item "nearest neighbor point" of the reliability information generated according to the above-described first specific example is "1", the berthing parameter calculation unit 16 determines that the reliability of the respective measured points (nearest neighbor points) included in the berthing place edge point cloud SP is higher than a predetermined value. Or, for example, when the total reliability r included in the reliability information generated according to the above-described second specific example is larger than 0.3, the berthing parameter calculation unit 16 determines that the reliability of the respective measured points (nearest neighbor points) included in the berthing place edge point cloud SP is higher than a predetermined value. When such a determination is made, the berthing parameter calculation unit 16 sets the coordinate position of the reference point R at the next processing time t+1 after the processing time t to $[L_x \, L_y \, L_z\text{-}h+d_q\tan\theta]^T$. In this embodiment, the value of θ at the coordinate position $[L_x \, L_y \, L_z\text{-}h+d_q\tan\theta]^T$ of the reference point R is set to a predetermined value (e.g., 30°). The angle θ is set as the elevation angle of the reference point R when the nearest neighbor point HP is used as a reference. That is, the angle θ is set as an elevation angle when viewing the reference point R from the quay.

Then, after the processing time t+1, the berthing parameter calculation unit 16 repeatedly performs the processing of setting the reference point, acquiring the berthing place edge point cloud, and generating the berthing side straight line.

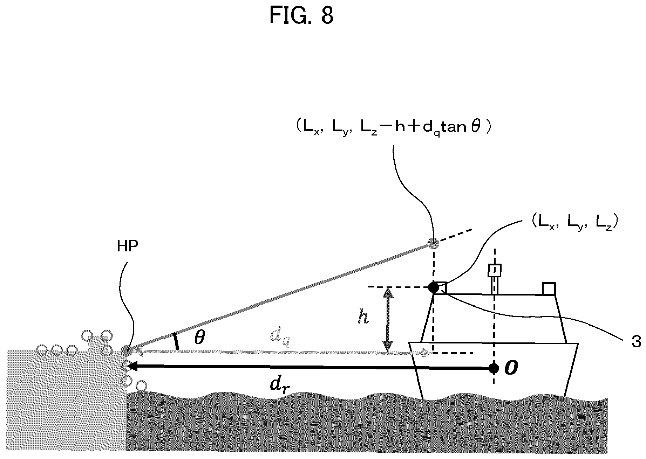

For example, an outline of the processing of setting the reference point of the ship side in this embodiment can be expressed as shown in FIG. 8. FIG. 8 is a diagram showing an outline of the processing of setting of the reference point of the ship side in the first embodiment.

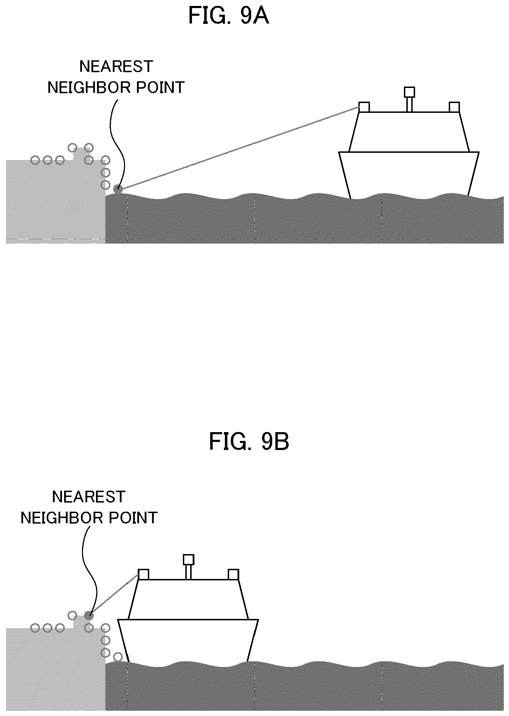

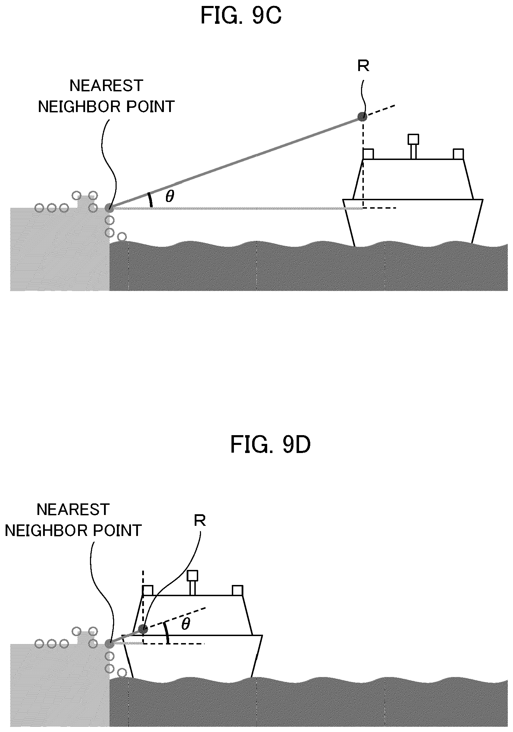

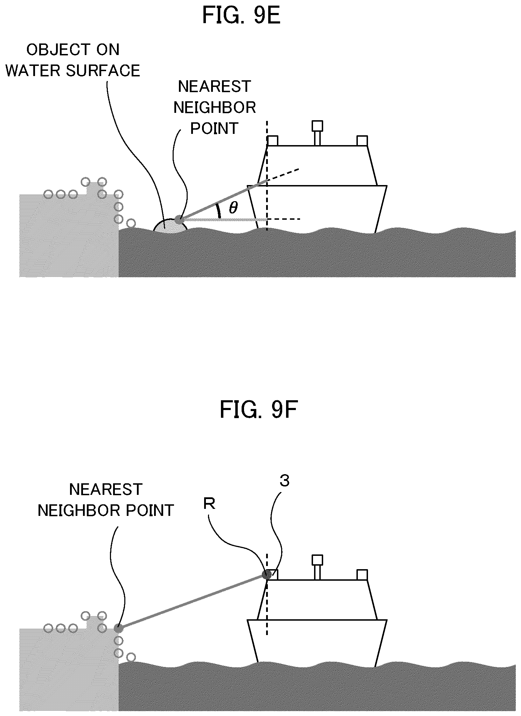

Incidentally, according to a technique known in the art, for example, when the distance from the ship to the berthing place is long as shown in FIG. 9A, there may be a case where an object on the water surface such as a water surface reflection and a wave splash is erroneously extracted as the nearest neighbor point. Further, according to a technique known in the art, for example, when the distance from the ship to the berthing place is very close as shown in FIG. 9B, there may be a case where an object having a height with respect to the upper surface of the quay is erroneously extracted as the nearest neighbor point. In contrast, according to the processing described above, for example, in the case where the reliability of the measured points (nearest neighbor points) included in the berthing place edge point cloud is higher than a predetermined value and the distance from the ship to the berthing place is far, the reference point used for the search (extraction) of the berthing place edge point cloud may be set to the position higher than the installed position of the lidar 3. Thus, it is possible to prevent the water surface reflection data near the water surface from being caught by the nearest neighbor search. Further, according to the processing described above, for example, when the reliability of the measured points (nearest neighbor points) included in the berthing place edge point cloud is higher than a predetermined value and the distance from the ship to the berthing place is close, the reference point used for the search (extraction) of the berthing place edge point cloud may be set to the position lower than the installed position of the lidar 3. Thus, it is possible to prevent an object existing on the quay from being caught by the nearest neighbor search. Therefore, according to the above-described processing, regardless of whether the distance from the ship to the berthing place is long or short, the angle $\theta$ corresponding to the elevation angle when viewing at the reference point R from the quay becomes constant, and the nearest neighbor search under the same condition independent of the distance to the quay can be carried out (refer to FIGS. 9C and 9D). This helps to keep the performance of the operation support system constant. Further, according to the processing described above, for example, in the case where the reliability of the measured points (nearest neighbor points) included in the berthing place edge point cloud is equal to or lower than a predetermined value, the reference point used for the search (extraction) of the berthing place edge point cloud may be set to the installed position of the lidar 3. Specifically, when the berthing parameter calculation unit 16 erroneously extracts an object on the water surface as the nearest neighbor point included in the berthing place edge point cloud at the processing time t (refer to FIG. 9E), the reliability of the measured points (nearest neighbor points) included in the berthing place edge point cloud is equal to or lower than a predetermined value. in such a case, the berthing parameter calculation unit 16 may set the installed position of the lidar 3 to the next reference point R (at the processing time t+1), and perform the search and extraction of the nearest neighbor points using the next reference point R (see FIG. 9F). Therefore, according to the above-described processing, it is possible to extract the berthing point edge point cloud according to the position of the reference point, and to generate an appropriate berthing side straight line based on the nearest neighbor points included in the berthing point edge point cloud.

(Processing flow)

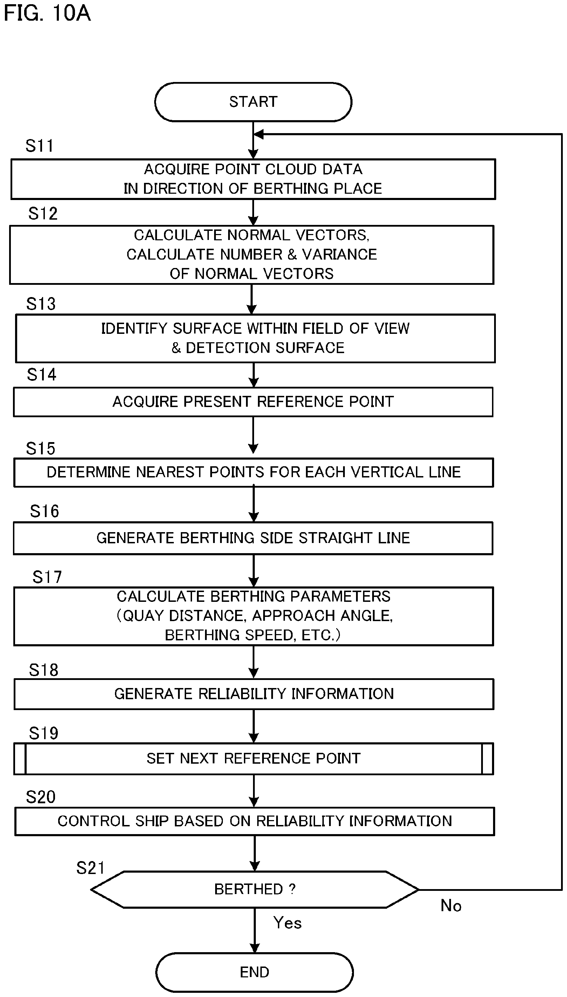

FIG. 10A is a flowchart showing an outline of berthing support processing in the present embodiment. The information processing device 1 repeatedly executes the processing of the flowchart shown in FIG. 10A.

First, the information processing device 1 acquires point cloud data in the direction of the berthing place (step S11). In this case, the information processing device 1 acquires the point cloud data generated by the lidar 3 whose measurement range includes the berthing side of the target ship, for example. The information processing device 1 may further perform down-sampling of the acquired point cloud data and removal of the data reflected by the water surface.

Next, the berthing place detection unit 15 of the information processing device 1 calculates the normal vectors based on the point cloud data acquired in step S11 (step S12). Further, in step S12, the berthing place detection unit 15 calculates the number of the normal vectors and the variance of the normal vectors. Further, the berthing place detection unit 15 identifies the surface within field of view and the detection surface, based on the result of the process in step S12 (step S13).

Next, the berthing parameter calculation unit 16 acquires the present reference point R (of the processing time t) from the memory 12 (step S14).

Next, the berthing parameter calculation unit 16 performs a process of searching for the nearest neighbor point closest to the reference point for each vertical line on the basis of the point cloud data acquired in step S11 and the reference point R acquired in step S14 (step S15).

Next, the berthing parameter calculation unit 16 generates the berthing side straight line L using the nearest neighbor point for each vertical line obtained in step S15 (step S16).

Next, the berthing parameter calculation unit 16 calculates the quay distance, the approach angle and the berthing speed, which are the berthing parameters, using the berthing side straight line L calculated in step S16 (step S17).

Next, the berthing parameter calculation unit 16 generates the reliability information on the basis of the identification result of the surface in the field of view and the detected surface in step S13 and the calculation result of the berthing parameters in step S16 (step S18).

The berthing parameter calculation unit 16 extracts, from among the respective nearest neighbor points acquired in step S15, one nearest neighbor point (hereinafter, also referred to as the quay nearest neighbor point) at which the distance between the reference point R acquired in step S14 and the berthing side straight line L generated in step S16 becomes the shortest. Then, the berthing parameter calculation unit 16 performs processing of setting the next reference point R (of the processing time t+1) based on the quay nearest neighbor point extracted as described above and the reliability information generated in step S17 (step S19).

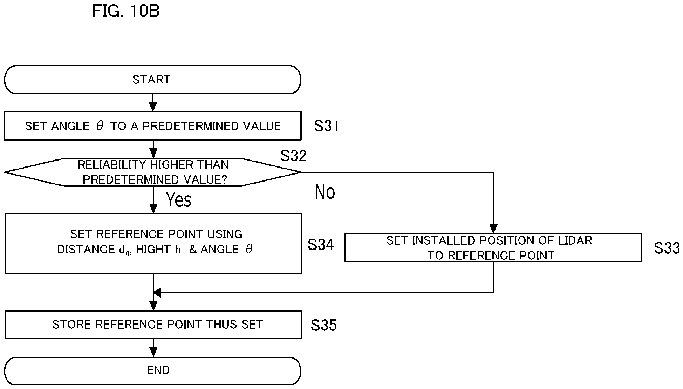

Here, a specific example of the process performed in step S19 will be described with reference to FIG. 10B. FIG. 10B is a flowchart illustrating an exemplary process of setting the reference point.

The berthing parameter calculation unit 16 sets the angle $\theta$ to a predetermined value (step S31), and then determines whether or not the reliability included in the reliability information generated in step S17 is higher than the predetermined value (step S32).

When the reliability is equal to or lower than the predetermined value (step S32: No), the berthing parameter calculation unit 16 sets the installed position of the lidar 3 as the next reference point R (step S33), store the set next reference point R in the memory 12 (step S35), and then performs the process of step S20. When the reliability is higher than the predetermined value (step S32: Yes), the berthing parameter calculation unit 16 sets the next reference point R by using the distance $d_q$, the height h and the angle θ (step S34), stores the set next reference point R in the memory 12 (step S35), and then performs the process of step S20. The quay nearest neighbor point is used in calculating the distance $d_q$.

After performing the process of the step S19, the information processing device 1 performs the control of the ship based on the reliability information (step S20). Thus, the information processing device 1 can accurately perform the control of the ship relating to the berthing on the basis of the reliability accurately reflecting the berthing state.

Then, the information processing device 1 determines whether or not the target ship is berthed (step S21). In this case, for example, the information processing device 1 determines whether or not the target ship is berthed, based on the output signal of the sensor group 2 or a user input via the interface 11. Then, the information processing device 1 terminates the processing of the flowchart when it is determined that the target ship is berthed (step S21: Yes). On the other hand, when the target ship is not berthed (step S21: No), the information processing device 1 returns to the process of step S11.

According to the processing described above, the acquisition means acquires measurement data which is a set of data specified by the set of the index representing the position in a horizontal direction and the index representing the position in a vertical direction generated by the measurement device provided on the ship. Further, according to the processing described above, the nearest neighbor point extraction means extracts data representing the nearest neighbor point, which is nearest to the the reference point of the ship, from the data representing the measured points of the berthing place for each index representing the position in a horizontal direction. Further, according to the processing described above, the reference point setting means sets the reference point at the next processing time, based on the nearest neighbor points. Further, according to the processing described above, the reference point setting means sets the reference point based on the reliability of the nearest neighbor point. Further, according to the processing described above, when the reliability of the nearest neighbor point is equal to or lower than a predetermined value, the reference point setting means sets the position where the measurement device is installed in the ship as a reference point. Further, according to the processing described above, when the reliability of the nearest neighbor point is higher than the predetermined value, the reference point setting means sets the height of the reference point in accordance with the distance between the ship and the berthing place.

As described above, according to the present embodiment, the reference point on the ship side can be changed (in the z direction) according to the berthing place or the situation around the berthing place. Thus, the berthing place edge point cloud according to the position of the reference point can be extracted, and the appropriate berthing side straight line can be generated on the basis of each nearest neighbor points included in the berthing place edge point cloud. Therefore, according to the present embodiment, it is possible to calculate the parameters used in the berthing support, such as the distance, the speed, and the angle, with high accuracy on the basis of the berthing side straight line generated as described above.

<Second embodiment>

Next, the second embodiment will be described below. Incidentally, in the present embodiment, description of the part to which the same configuration as the first embodiment is applicable will be appropriately omitted, and the description will be focused on a part different from the first embodiment. Specifically, in the present embodiment, the system configuration, the hardware configuration, and the functional configuration are substantially the same as in the first embodiment, but the contents of the processing performed in the berthing parameter calculation unit 16 are different from those in the first embodiment. Therefore, in the following, the description of the processing performed by the berthing parameter calculation unit 16 is mainly performed.

[Method of setting and using the reference point]

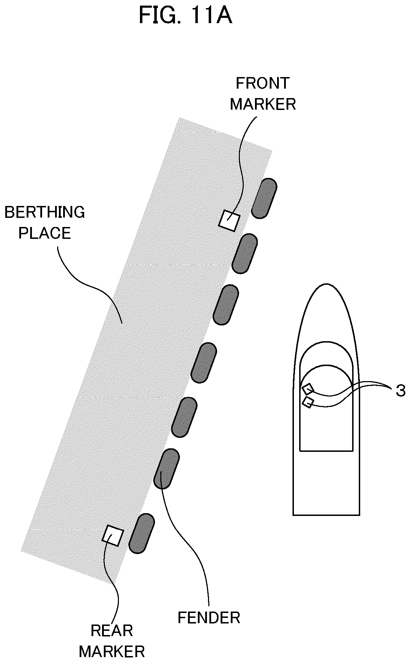

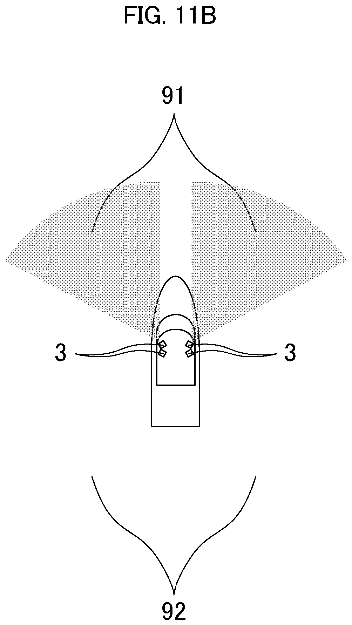

Here, a description will be given of a method of setting and using the reference point in this embodiment. Incidentally, in the present embodiment, for example, as shown in FIG. 11A, a description will be given of a case where a ship is berthed at a berthing place where it is difficult to generate an appropriate berthing side straight line due because the fenders are provided along the wall surface. Further, in the present embodiment, for example, as shown in FIG. 11A, a description will be given of the case where a marker having the retroreflective material is disposed on the front side and the rear side of the ship at the berthing place. Further, in the present embodiment, for example, as shown in FIG. 11B, a description will be given of the case where the ship is provided with two lidars 3 having a field of view range 91 in the port front and the starboard front of the ship, and two lidars 3 having a field of view range 92 in the port rear and the starboard rear of the ship. Further, in the present embodiment, a description will given of the case where the marker provided on the front side of the ship at the berthing place (hereinafter, also referred to as forward marker) may be included in the field of view range 91, and the marker provided on the rear side of the ship at the berthing place (hereinafter, also referred to as backward marker) may be included in the field of view range 92. Further, in the present embodiment, a description will be given of the case where the reliability of the respective measured points (nearest neighbor points) included in the berthing place edge point cloud SP is determined to be higher than a predetermined value by the same process as in the first embodiment. FIG. 11A is a diagram showing an example of a situation to which the second embodiment can be applied. FIG. 11B is a top view showing an example of a ship and the field of view of the lidars included in the operation support system.

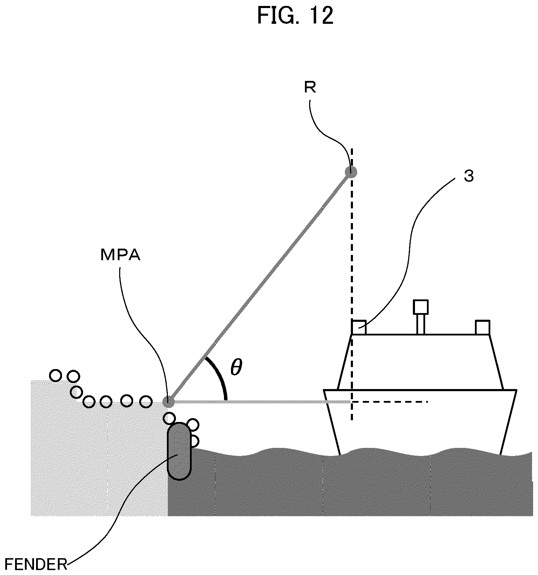

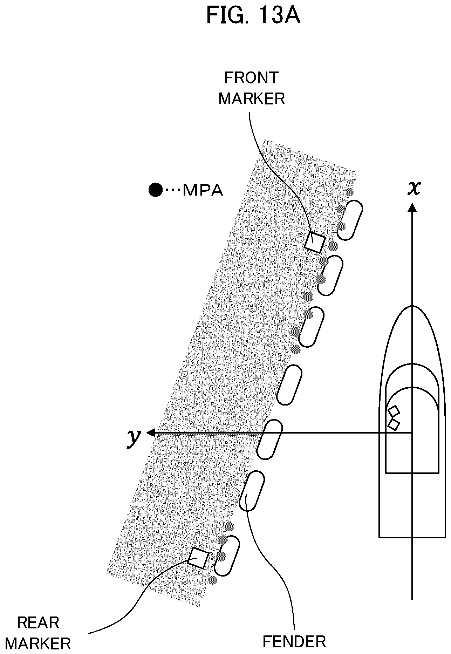

The berthing parameter calculation unit 16 sets the coordinate position of the reference point R to $[L_x \ L_y \ L_z$-$h+d_q\tan60°]^T$ by setting $\theta=60°$, for example. According to such a process, the reference point R is set at the position with a large elevation angle when viewed from the quay. In other words, the nearest neighbor search is performed from a relatively high position. Further, the berthing parameter calculation unit 16 performs processing of searching for the nearest neighbor point MPA closest to the reference point R for each vertical line on the basis of the respective measured points constituting the point cloud data generated by the lidar 3 at the processing time t+1 and the reference point R set as described above. According to such a process, for example, as shown in FIG. 12, while preventing the measured point on the fender from being extracted as the nearest neighbor point MPA in the vertical line, the measured point on the edge portion of the berthing place can be extracted as the nearest neighbor point MPA on the vertical line. Further, according to the above-described process, for example, the nearest neighbor points MPA as shown in FIG. 13A are extracted. FIG. 12 is a diagram showing an outline of a process of extracting the nearest neighbor point MPA. FIG. 13A is a diagram illustrating an example of the nearest neighbor points MPA extracted by the process shown in FIG. 12.

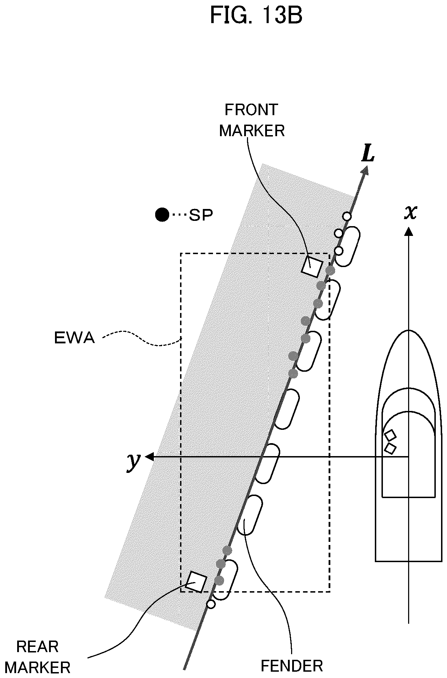

The berthing parameter calculation unit 16 sets the extraction window EWA which is a rectangular area on the xy plane on the basis of the measured points indicating the position of the front marker and the measured point indicating the position of the rear marker. In addition, the berthing parameter calculation unit 16 acquires the berthing place edge point cloud SP at the processing time t+1 by extracting the nearest neighbor points MPA belonging to the range of the extraction window EWA from among the nearest neighbor points MPA extracted for each vertical line. Further, the berthing parameter calculation unit 16 generates the berthing side straight line L at the processing time t+1 based on the berthing place edge point cloud SP. According to such a process, for example, the rectangular extraction window EWA as shown in FIG. 13B is set on the xy plane. Further, according to the above-described process, for example, as shown in FIG. 13B, a plurality of nearest neighbor points MPA belonging to the range of the extraction window EWA is acquired as the berthing place edge point cloud SP, and the berthing side straight line L is generated based on the berthing place edge point cloud SP. FIG. 13B is a top view showing the extraction window EWA and the berthing side straight line L.

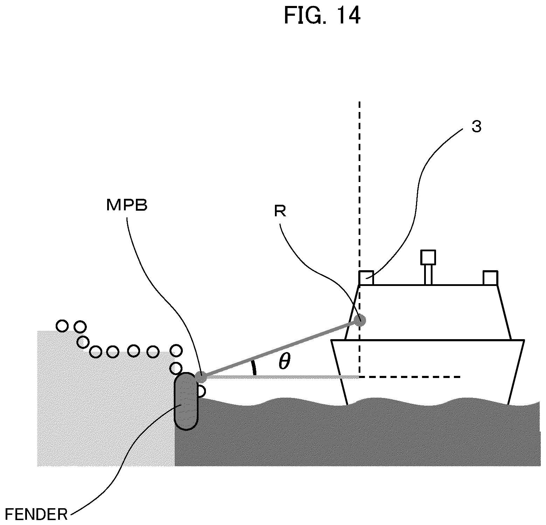

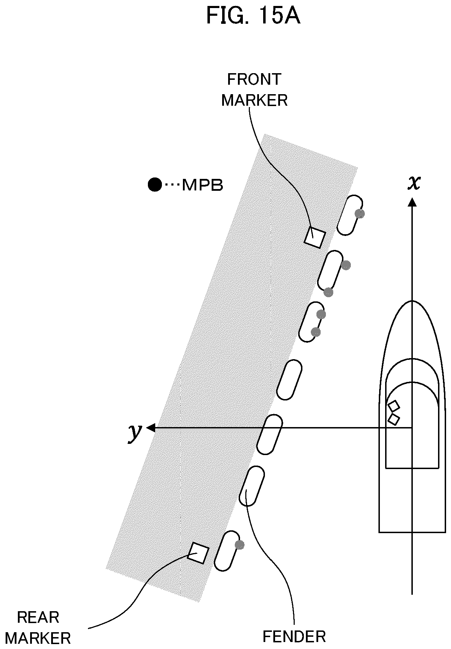

After performing the above-described processing, the berthing parameter calculation unit 16 resets the coordinate position of the reference point R to $[L_x \ L_y \ L_z$-$h+d_q\tan15°]^T$ by, for example, resetting $\theta=15°$. According to such a process, it is possible to set the reference point R at a position with a small elevation angle when viewed from the quay. In other words, the nearest neighbor search is performed from a relatively lower position. Further, the berthing parameter calculation unit 16 performs processing of searching for the nearest neighbor point MPB closest to the reference point R for each vertical line on the basis of the measured points obtained by removing noises from the point cloud data generated by the lidar 3 at the processing time t+1 and the reference point R that is reset as described above. According to such a process, for example, as shown in FIG. 14, the measured point on the fender can be extracted as the nearest neighbor point MPB on the vertical line. Further, according to the above-described process, for example, the nearest neighbor point MPB as shown in FIG. 15A is extracted. FIG. 14 is a diagram showing an outline of a process of extracting the nearest neighbor point MPB. FIG. 15A is a diagram illustrating an example of the nearest neighbor points MPB extracted by the process shown in FIG. 14.

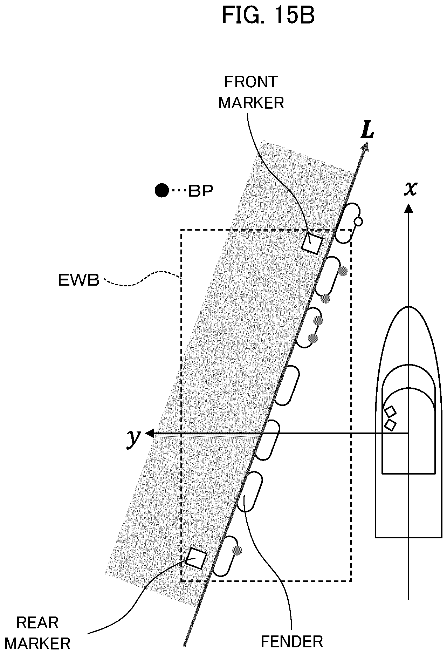

The berthing parameter calculation unit 16 sets the extraction window EWB which is a rectangular area on the xy plane on the basis of the measured points indicating the position of the front marker and the measured points indicating the position of the rear marker. It is preferred to set the extraction window EWB by changing the rectangular area slightly with respect to the extraction window EWA so that the detection points of the fenders installed on the side of the quay can be extracted. For example, the extraction window EWB is set as a rectangular area on the xy plane having a boundary in the x-direction at a position closer to the side surface of the ship than the extraction window EWA and having a boundary in the y-direction at a position farther from the rear of the ship than the extraction window EWA. In addition, the berthing parameter calculation unit 16 acquires the fender point cloud BP indicating the position of the fenders corresponding to the berthing side straight line L by extracting the nearest neighbor point belonging to the range of the extraction windowing EWB from among the nearest neighbor point MPB extracted for each vertical line. According to such a process, for example, as shown in FIG. 15B, a larger extraction window EWB than the extraction window EWA is set on the xy plane. Further, according to the above-described process, for example, as shown in FIG. 15B, a plurality of nearest neighbor points MPB belonging to the range of the extraction window EWB is acquired as the fender point cloud BP. FIG. 15B is a top view showing the extraction window EWB.

The berthing parameter calculation unit 16 extracts, from among the nearest neighbor points included in the fender point cloud BP, one nearest neighbor point KP whose distance from the origin O of the ship coordinate system is the shortest. For example, the origin O may be set to the center position or the center of gravity position of the target ship.

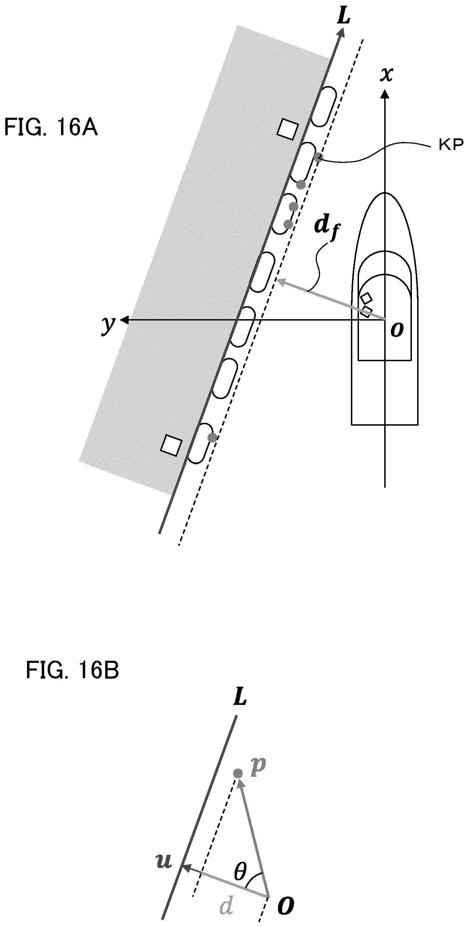

Here, a specific example of a process that can be used to extract a nearest neighbor point KP from among the nearest neighbor points included in the fender point cloud BP will be described with reference to FIGS. 16A and 16B. FIG. 16A is a top view showing the origin O, the berthing side straight line L, the nearest neighbor points KP, and the range $d_f$. FIG. 16B is a view showing the unit vector "u" used for searching for the nearest neighbor point KP.

First, the berthing parameter calculation unit 16 generates the berthing side straight line L given by the following Formula (3) by applying principal component analysis or the least squares method to the berthing place edge point cloud SP.

[Formula 3]

$$L : \begin{bmatrix} L_x \\ L_y \\ L_z \end{bmatrix} = \begin{bmatrix} x_0 \\ y_0 \\ z_0 \end{bmatrix} + k \begin{bmatrix} a \\ b \\ c \end{bmatrix} \quad (3)$$

Here, "$[x_0\ y_0\ z_0]^T$" indicates a center of gravity of the measured points indicated by the berthing place edge point cloud SP, "$[a\ b\ c]^T$" indicates a direction vector, and "k" indicates a parametric variable. For example, in principal component analysis, the eigenvector corresponding to the largest eigenvalue is the direction vector of L.

Then, the berthing parameter calculation unit 16 calculates the unit vector u to be perpendicular to the berthing side straight line L in a two-dimensional plane, as shown by the following Formula (4). The unit vector u is expressed as a vector starting from the origin O, as shown in FIG. 16B.

[Formula 4]

$$u = \frac{1}{\sqrt{a^2 + b^2}} \begin{bmatrix} b \\ -a \end{bmatrix} = \begin{bmatrix} u_x \\ u_y \end{bmatrix} \quad (4)$$

The dot product of the (x,y) component of the data p representing the measured point of the fender point cloud BP and the unit vector u corresponds to the projection of the data p to the vector u. Therefore, the following Formula (5) relating to the distance "d" shown in FIG. 16B is established.

[Formula 5]

$$p \cdot u = |p||u| \cos \theta = |p| \cos \theta = d \quad (5)$$

Accordingly, the berthing parameter calculation unit 16 calculates the distance d based on the following Formula (6).

[Formula 6]

$$d = p_x u_x + p_y u_y \quad (6)$$

Then, the berthing parameter calculation unit 16 calculates the distance based on the above Formula (6) for the respective measured points represented by the fender point cloud BP, and extracts the data of the measured point indicating the shortest distance among them as the nearest neighbor point KP. Further, the berthing parameter calculation unit 16 calculates the distance $d_f$ between the origin O and the fender on the horizontal plane (xy plane) by applying the data representing the nearest neighbor point KP to the above-mentioned Formula (6).

Generally, it is difficult to generate a straight line from the fender point cloud BP because the fender is hard to detect because of its low reflectance material such as black rubber, and because it is not easy to identify the edge-part like the quay because of its rounded shape. Therefore, a method of searching for the nearest neighbor point KP using the berthing side straight line L as described above is adopted. If the fender is made of a highly reflective material, and it is easy to identify the edges, a straight line may be generated from the fender point cloud BP, and the nearest neighbor point KP may be searched using the straight line.

According to the processing described above, even when fenders exist at the berthing place, it is possible to extract the edge point clouds at the berthing place according to the position of the reference point, and it is also possible to generate an appropriate berthing side straight line based on each nearest neighbor point included in the berthing place edge point cloud. In addition, according to the processing described above, when fender exist at the berthing place, it is possible to extract the fender point cloud according to the position of the reference point, and it is also possible to calculate the distance from the ship to the fenders with high accuracy based on each nearest neighbor point included in the fender point cloud.

[Processing flow]

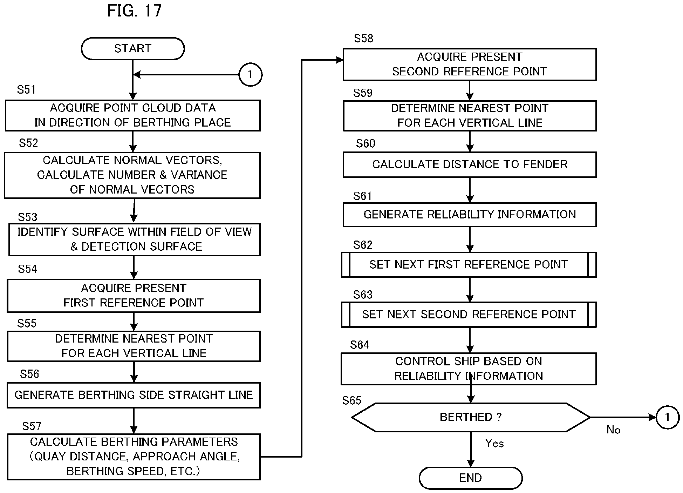

FIG. 17 is a flowchart showing an outline of the berthing support processing in the present embodiment. The information processing device 1 repeatedly executes the processing of the flowchart shown in FIG. 17.

The berthing parameter calculation unit 16 performs the same processes as steps S11 to S13 in steps S51 to S53. Thereafter, the berthing parameter calculation unit 16 acquires the present first reference point R1 from the memory 12 as the reference point used for detecting the edge portion of the berthing place (step S54).

Subsequently, in steps S55 to S57, the berthing parameter calculation unit 16 performs the same processes as steps S15 to S17 while using the first reference point R1 acquired in step S54 as needed. Thereafter, the berthing parameter calculation unit 16 acquires the present second reference point R2 from the memory 12 as the reference point used for detecting the fender provided at the berthing place (step S58).

Subsequently, the berthing parameter calculation unit 16 performs a process of searching for the nearest neighbor point closest to the second reference point R2 acquired in step S58 for each vertical line (step S59).

Subsequently, the berthing parameter calculation unit 16 acquires, from among the respective nearest neighbor points acquired in step S59, the fender point cloud indicating the position of the fender corresponding to the berthing side straight line L. In addition, the berthing parameter calculation unit 16 extracts, from among the nearest neighbor points included in the fender point cloud, one nearest neighbor point (hereinafter, also referred to as the fender nearest neighbor point) whose distance from the origin O of the ship coordinate system becomes the shortest. Then, the berthing parameter calculation unit 16 calculates the distance $d_f$ from the ship (origin O) to the fender based on the fender nearest neighbor point extracted as described above and the berthing side straight line L (step S60).

Subsequently, in step S61, the berthing parameter calculation unit 16 performs the same process as in step S18. Thereafter, the berthing parameter calculation unit 16 sets the next first reference point R1 by performing the same processing as that shown in the FIG. 10B (step S62). Further, the berthing parameter calculation unit 16 sets the next second reference point R2 by performing the same processing as the processing shown in FIG. 10B using the distance $d_f$ instead of the distance $d_q$ (step S63). Thereafter, the berthing parameter calculation unit 16 performs the same processes as steps S20 and S21 in steps S64 and S65.

According to the processing described above, the reference point setting means sets, as the reference point when the reliability of the nearest neighbor point is higher than the predetermined value, the first reference point used for extraction of the data representing the nearest neighbor points, and the second reference point used for extraction of the data representing the measured points of the fender provided at the berthing place. Further, according to the processing described above, the reference point setting means sets the first reference point to have a large elevation angle when viewed from the quay, and sets the second reference point to have a small elevation angle when viewed from the quay.

As described above, according to the present embodiment, even when the fenders exist at the berthing place, the distance from the ship to the fender can be calculated with high accuracy as the quay distance. That is, according to the present embodiment, it is possible to calculate the parameters used in berthing support with high accuracy.

[Modification]

Hereinafter, a description will be given of preferred modifications to the second embodiment described above.

(Modification 1)

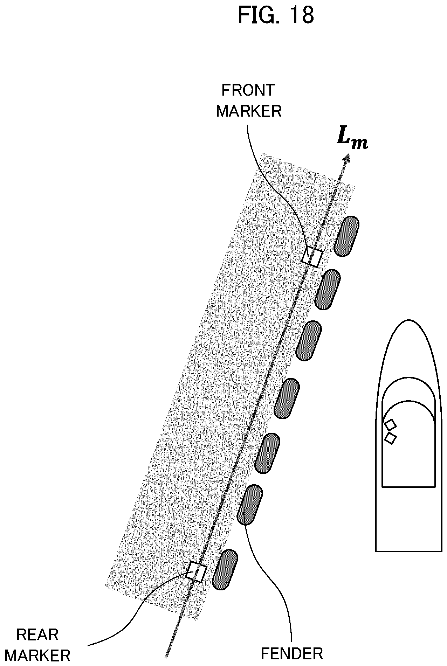

When it is detected that an inconvenient situation in acquiring the berthing place edge point cloud is taking place, for example, fenders larger than a predetermined size are closely provided at the berthing place, the berthing parameter calculation unit 16 may generate a marker straight line Lm, which is a straight line passing through the front marker and the rear marker, instead of the berthing side straight line. In such a case, the berthing parameter calculation unit 16 may calculate the distance $d_f$ using the marker straight line Lm. The marker straight line Lm may be generated as a straight line as shown in FIG. 18, for example. FIG. 18 is a top view illustrating the marker straight line Lm.

(Modification 2)

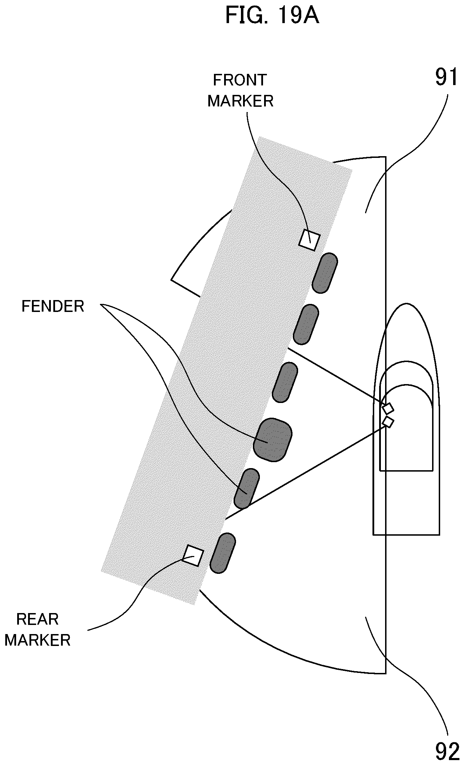

If the lidar 3 has a field of view range of less than 180° in the side direction of the target ship, for example, as shown in FIG. 19A, when a plurality of fenders of differing sizes is provided in the region out of the field of view range of the side direction, they cannot be detected. In addition, even if the lidar 3 had a field of view range of 180° or more in the side direction of the target ship, there are cases where it is impossible to detect the measured point for which distance from the target ship to the fender ship becomes the shortest because the surface of the fender is formed using black rubber, for example. In this modification, a description will be given of a method for making it possible to calculate the shortest distance from the ship to the fender, in consideration of the occurrence of the above-described situation.

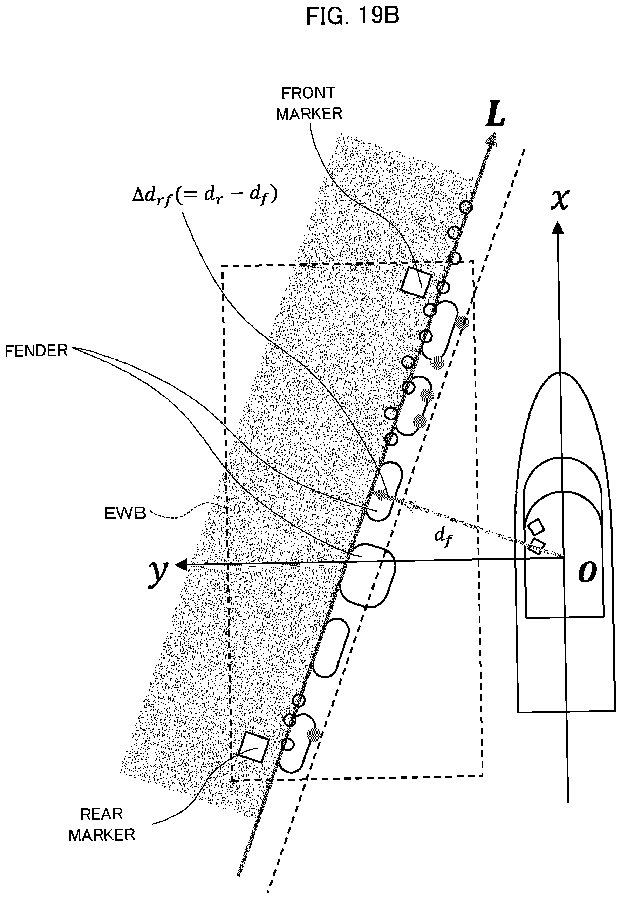

The berthing parameter calculation unit 16 calculates the distance $d_{f\_min}$ corresponding to the shortest distance from the ship to the fender based on the quay distance $d_r$ from the origin O to the berthing place and the difference value $\Delta d_{rf}$ (see FIG. 19B) calculated by subtracting the distance $d_f$ from the quay distance $d_r$, for example.

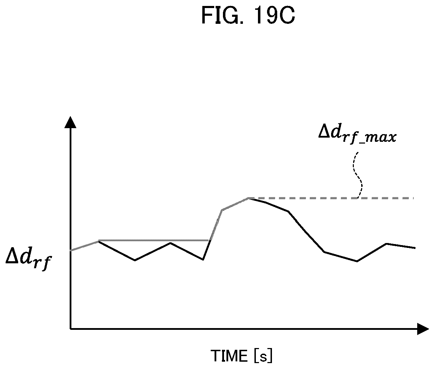

Specifically, the berthing parameter calculation unit 16 detects the time change of the difference value $\Delta d_{rf}$ by continuously calculating the difference value $\Delta d_{rf}$ after the timing when the berthing support is started, for example. Further, the berthing parameter calculation unit 16 acquires a difference value $\Delta_{drf\_max}$ corresponding to the maximum value of the difference value $\Delta d_{rf}$ within the predetermined time (see. FIG. 19C) at a timing at which a predetermined time has elapsed from the start of calculating the difference value $\Delta d_{rf}$, for example. Incidentally, the difference value $\Delta_{drf\_max}$ is updated to the most recent value in accordance with the elapsed time. Then, the berthing parameter calculation unit 16 calculates the distance $d_{f\_min}$ by subtracting the newest difference value $\Delta d_{rf\_max}$ from the quay distance $d_r$.

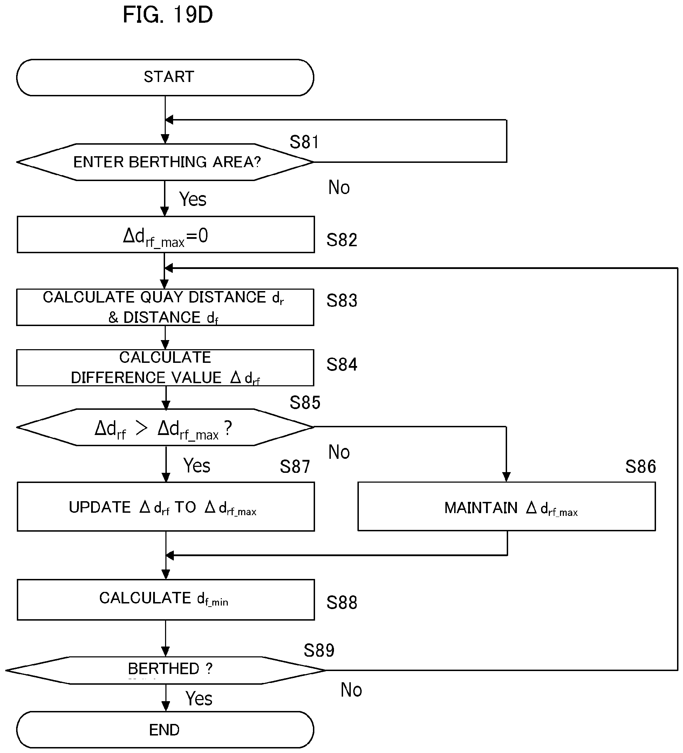

Here, the processing flow of this modification will be described. FIG. 19D is a flowchart showing an example of processing for calculating the shortest distance from a ship to a fender.

The berthing parameter calculation unit 16 determines whether or not at least a portion of the body of the target ship has entered the berthing area (step S81). Incidentally, the berthing area is the area where the target ship should be located when the target ship is berthed to the berthing place.

When the body of the target ship does not enter the berthing area (step S81: No), the berthing parameter calculation unit 16 repeatedly performs the process of step S81. When the body of the target ship enters the berthing area (step S81: Yes), the berthing parameter calculation unit 16 sets the difference value $\Delta d_{rf\_max}$ to 0 (step S82), and calculates the quay distance $d_r$ and the distance $d_f$ (step S83).

Subsequently, the berthing parameter calculation unit 16 calculates the difference value $\Delta d_{rf}$ by subtracting the distance $d_f$ from the quay distance $d_r$ (step S84).

Subsequently, the berthing parameter calculation unit 16 determines whether or not the difference value $\Delta d_{rf}$ is larger than the difference value $\Delta_{drf\_max}$ (step S85).

When the difference value $\Delta d_{rf}$ is equal to or smaller than the difference value $\Delta d_{rf\_max}$ (step S85: No), the berthing parameter calculation unit 16 maintains the difference value $\Delta d_{rf\_max}$ (step S86) and calculates the distance $d_{f\_min}$ corresponding to the shortest distance from the ship to the fender by subtracting the difference value $\Delta_{drf\_max}$ from the quay distance $d_r$ (step S88). When the difference value $\Delta d_{rf}$ is larger than the difference value $\Delta d_{rf\_max}$ (step S85: Yes), the berthing parameter calculation unit 16 updates the difference value $\Delta_{drf}$ to $\Delta d_{rf\_max}$ (step S87), and calculates the distance $\Delta d_{rf\_min}$ corresponding to the distance from the ship to the fender by subtracting the difference $\Delta_{drf\_max}$ from the quay distance $d_r$ (step S88).

Thereafter, the information processing device 1 determines whether or not the target ship is berthed (berthing) (step S89). In this case, for example, the information processing device 1 determines whether or not the target ship is berthed based on the output signal of the sensor group 2 or a user input via the interface 11. When it is determined that the target ship is berthed (step S89: Yes), the information processing device 1 terminates the processing of the flowchart. On the other hand, when it is determined that the target ship is not berthed (step S89: No), the information processing device 1 returns to the process of step S83.

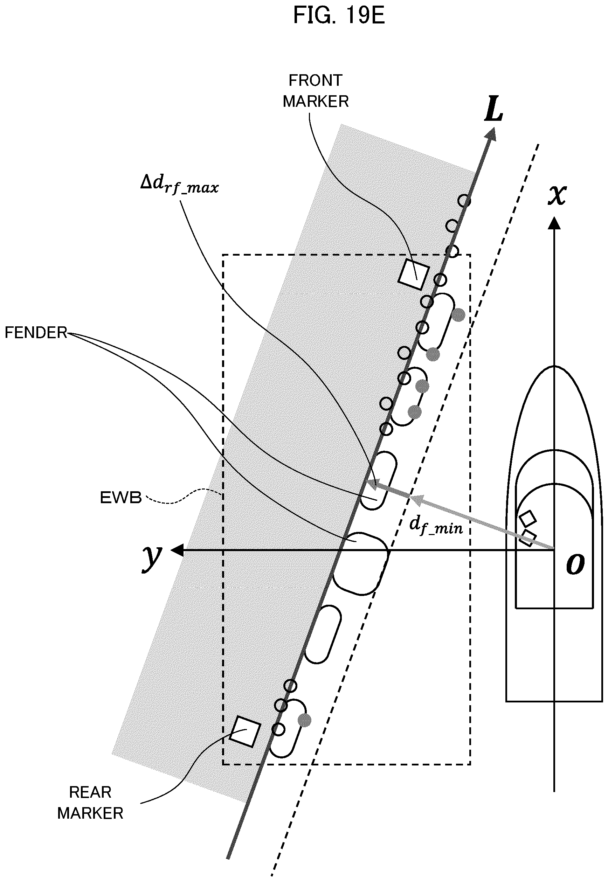

Incidentally, the difference value $\Delta d_{rf}$ corresponds to a overhang length, which is the length that the fender installed at the position closest to the ship overhangs from the wall surface of the berthing place. According to the process described above, the largest value of the above-described overhang length is continuously calculated as a difference value $\Delta d_{rf\_max}$ and the distance $d_{f\_min}$ is calculated using the difference value $\Delta d_{rf\_max}$ (see FIG. 19E). In addition, the distance $d_{f\_min}$ can also be used as the quay distance including the fender. Therefore, according to the processing described above, for example, even in a case where the lidar has a field of view range of less than 180° in the side direction of the target ship and the fenders of various size are provided at the berthing place, the shortest distance from the target ship to the largest fender can be calculated as the quay distance. Further, according to the above-mentioned processing, for example, even when there are many detection failures of the measured points of the fender, the shortest distance to the fender can be calculated.

In the present embodiment described above, the program may be stored using various types of non-temporary computer readable media (non-transitory computer readable medium) and supplied to a controller that is a computer, etc. Non-transitory computer readable media include various types of entity storage media (tangible storage medium). Examples of non-transitory computer-readable media include magnetic storage media (e.g., flexible disks, magnetic tapes, hard disk drives), magneto-optical storage media (e.g., magneto-optical disks), CD-ROM(Read Only Memory), CD-R, CD-R/W, solid-state memories (e.g., mask ROM, PROM(Programmable ROM), EPROM(Erasable PROM) and flash ROM, RAM(Random Access Memory.

While the present invention has been described with reference to the embodiments, the present invention is not limited to the above embodiments. Various modifications that can be understood by a person skilled in the art within the scope of the present invention can be made to the configuration and details of the present invention. That is, the Present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

DESCRIPTION OF REFERENCE NUMBERS

**[0136]**

1 Information processing device
2 Sensor group
3 Lidar

**Claims**

1. An information processing device comprising:

   an acquisition means configured to acquire measurement data which is a set of data specified by a pair of an index representing a position in a horizontal direction and an index representing a position in a vertical direction generated by a measurement device installed on a ship;
   a nearest neighbor point extraction means configured to extract the data representing a nearest neighbor point which is nearest to a reference point of the ship, from the data representing measured points of a berthing place, for each index representing the position in a horizontal direction; and
   a reference point setting means configured to set the reference point at a next processing time, based on the nearest neighbor points.

2. The information processing device according to claim 1, wherein the reference point setting means sets the reference point based on reliability of the nearest neighbor point.

3. The information processing device according to claim 2, wherein the reference point setting means sets a position on the ship where the measurement device is installed, as the reference point, when the reliability of the nearest neighbor point is equal to or lower than a predetermined value.

4. The information processing device according to claim 2, wherein the reference point setting means sets the reference point by changing a height of the position where the measurement device is installed according to a distance between the ship and the berthing place, when the reliability of the nearest neighbor point is higher than a predetermined value.

5. The information processing device according to claim 2, wherein the reference point setting means sets, as the reference point, a first reference point used for extraction of the data representing the nearest neighbor point and a second reference point used for extraction of the data representing a measured point of a fender provided at the berthing place, when the reliability of the nearest neighbor point is higher than a predetermined value.

6. The information processing device according to claim 5, wherein the reference point setting means sets the first reference point to have a large elevation angle when viewed from a quay, and sets the second reference point to have a small elevation angle when viewed from the quay.

7. The information processing device according to claim 5, further comprising a quay distance calculation means configured to calculate a quay distance corresponding to a distance from the ship to a quay of the berthing place, based on a search result of the nearest neighbor point using the first reference point.

8. The information processing device according to claim 7, further comprising a fender distance calculation means configured to calculate a fender distance corresponding to a distance from the ship to the fender, based on a search result of the nearest neighbor point using the second reference point.

9. The information processing device according to claim 8, wherein the fender distance calculation means calculates an overhang length which is a maximum value of a difference value between the quay distance calculated within a predetermined time and the fender distance, and calculates the fender distance by subtracting the overhang length from the quay distance.

10. A control method executed by a computer, comprising:

acquiring measurement data which is a set of data specified by a pair of an index representing a position in a horizontal direction and an index representing a position in a vertical direction generated by a measurement device installed on a ship;
extracting the data representing a nearest neighbor point which is nearest to a reference point of the ship, from the data representing measured points of a berthing place, for each index representing the position in a horizontal direction; and
setting the reference point at a next processing time, based on the nearest neighbor points.

11. A program causing a computer to execute processing of:

acquiring measurement data which is a set of data specified by a pair of an index representing a position in a horizontal direction and an index representing a position in a vertical direction generated by a measurement device installed on a ship;
extracting the data representing a nearest neighbor point which is nearest to a reference point of the ship, from the data representing measured points of a berthing place, for each index representing the position in a horizontal direction; and
setting the reference point at a next processing time, based on the nearest neighbor points.

12. A storage medium storing the program according to claim 11.

FIG. 1A

INFORMATION
PROCESSING
DEVICE

SENSOR GROUP

LIDAR

FIG. 1B

90

FIG. 1C

90

FIG. 2

<u>1</u>

INTERFACE 11

MEMORY 12

CONTROLLER 13

BERTHING PLACE DETECTION UNIT 15

BERTHING PARAMETER CALCULATION UNIT 16

FIG. 3

**BERTHING PLACE DETECTION UNIT** (15)

POINT CLOUD DATA →

- NORMAL VECTOR CALCULATION (20)
- FIELD OF VIEW & DETECTION SURFACE IDENTIFICATION (21)
- NORMAL VECTOR NUMBER IDENTIFICATION (22)
- MEAN & VARIANCE CALCULATION (23)
- BERTHING STATE DETERMINATION (24)

**BERTHING PARAMETER CALCULATION UNIT** (16)

- REFERENCE POINT SETTING (42)
- NEIGHBOR POINT SEARCH (26)
- NEAREST NEIGHBOR POINT EXTRACTION (41)
- STRAIGHT LINE GENERATION (27)
- APPROACH ANGLE CALCULATION (29)
- QUAY DISTANCE CALCULATION (28)
- BERTHING SPEED CALCULATION (30)
- RELIABILITY INFORMATION GENERATION (40)

# FIG. 4A

# FIG. 4B

FIG. 5A

| UPPER SURFACE | | | | SIDE SURFACE | | | | NEAREST NEIGHBOR POINT | DISTANCE | | ANGLE |
|---|---|---|---|---|---|---|---|---|---|---|---|
| VIEWING ANGLE | DETECTION | NUMBER OF NORMALS | VARIANCE | VIEWING ANGLE | DETECTION | NUMBER OF NORMALS | VARIANCE | VARIANCE | AMOUNT OF CHANGE | CHANGE RATE | AMOUNT OF CHANGE |
| 0 or 1 | 0 or 1 | 0 or 1 | 0 or 1 | 0 or 1 | 0 or 1 | 0 or 1 | 0 or 1 | 0 or 1 | 0 or 1 | 0 or 1 | 0 or 1 |

## FIG. 5B

| | | |
|---|---|---|
| NUMBER OF TARGET POINTS | $c_3 = \dfrac{1}{76 - 10}x - \dfrac{10}{76 - 10}$ | |
| STANDARD DEVIATION OF TARGET POINTS | $c_2 = \dfrac{1}{0.1 - 0.2}x - \dfrac{0.2}{0.1 - 0.2}$ | |
| POINT CLOUD BOTH SIDES /ONE SIDE | $c_1 = \begin{cases} 0.0 \ (x = 0) \\ 1.0 \ (x = 1) \end{cases}$ | |
| INTERVAL BETWEEN TWO ENDS OF TARGET POINTS | $c_0 = \dfrac{1}{20.0 - 4.0}x - \dfrac{4.0}{20.0 - 4.0}$ | |
| CALCULATION RELIABILITY | $c = \dfrac{w_3 c_3 + w_2 c_2 + w_1 c_1 + w_0 c_0}{w_3 + w_2 + w_1 + w_0}$ <br><br> $(w_3 = 8.0, w_2 = 4.0, w_1 = 2.0, w_0 = 1.0)$ | |
| TOTAL RELIABILITY | $r = \dfrac{w_{qs}(q_{s0} + q_{s1}) + w_{qu}(q_{u0} + q_{u1}) + w_m(m_0 + m_1) + w_c c}{2w_{qs} + 2w_{qu} + 2w_m + w_c}$ <br><br> $\left( w_{qs} = 2.0, w_{qu} = 1.0, w_{m0} = 1.0, w_{m1} = 1.0, w_c = 1.0 \right)$ | |

# FIG. 5C

L

STANDARD
DEVIATION $c_2$

M0

INTERVAL OF
BOTH ENDS $c_0$

BOTH SIDES
/ ONE SIDE $c_1$

M1

NUMBER $c_3$

FIG. 6A

FIG. 6B

FIG. 7A

FIG. 7B

# FIG. 8

$(L_x, L_y, L_z - h + d_q \tan \theta)$

$(L_x, L_y, L_z)$

HP

$\theta$

$d_q$

$h$

$d_r$

$O$

3

FIG. 9A

NEAREST
NEIGHBOR POINT

FIG. 9B

NEAREST
NEIGHBOR POINT

FIG. 9C

NEAREST
NEIGHBOR POINT

R

$\theta$

FIG. 9D

NEAREST
NEIGHBOR POINT

R

$\theta$

## FIG. 9E

OBJECT ON
WATER SURFACE

NEAREST
NEIGHBOR
POINT

$\theta$

## FIG. 9F

NEAREST
NEIGHBOR POINT

R

3

FIG. 10A

```
                        ┌─────────────┐
                        │    START    │
                        └──────┬──────┘
                               │
S11                            ▼
    ┌──────────────────────────────────────────────────┐
    │          ACQUIRE POINT CLOUD DATA                 │
    │        IN DIRECTION OF BERTHING PLACE             │
    └──────────────────────┬───────────────────────────┘
S12                        ▼
    ┌──────────────────────────────────────────────────┐
    │          CALCULATE NORMAL VECTORS,                │
    │        CALCULATE NUMBER & VARIANCE                │
    │             OF NORMAL VECTORS                     │
    └──────────────────────┬───────────────────────────┘
S13                        ▼
    ┌──────────────────────────────────────────────────┐
    │       IDENTIFY SURFACE WITHIN FIELD OF VIEW       │
    │              & DETECTION SURFACE                  │
    └──────────────────────┬───────────────────────────┘
S14                        ▼
    ┌──────────────────────────────────────────────────┐
    │          ACQUIRE PRESENT REFERENCE POINT          │
    └──────────────────────┬───────────────────────────┘
S15                        ▼
    ┌──────────────────────────────────────────────────┐
    │    DETERMINE NEAREST POINTS FOR EACH VERTICAL LINE│
    └──────────────────────┬───────────────────────────┘
S16                        ▼
    ┌──────────────────────────────────────────────────┐
    │         GENERATE BERTHING SIDE STRAIGHT LINE      │
    └──────────────────────┬───────────────────────────┘
S17                        ▼
    ┌──────────────────────────────────────────────────┐
    │          CALCULATE BERTHING PARAMETERS            │
    │        (QUAY DISTANCE, APPROACH ANGLE,            │
    │             BERTHING SPEED, ETC.)                 │
    └──────────────────────┬───────────────────────────┘
S18                        ▼
    ┌──────────────────────────────────────────────────┐
    │          GENERATE RELIABILITY INFORMATION         │
    └──────────────────────┬───────────────────────────┘
S19                        ▼
    ┌──────────────────────────────────────────────────┐
    │            SET NEXT REFERENCE POINT               │
    └──────────────────────┬───────────────────────────┘
S20                        ▼
    ┌──────────────────────────────────────────────────┐
    │    CONTROL SHIP BASED ON RELIABILITY INFORMATION  │
    └──────────────────────┬───────────────────────────┘
S21                        ▼
              ◁────────────────────────────▷     No
              ◁         BERTHED ?          ▷ ───────►
              ◁────────────────────────────▷
                           │ Yes
                           ▼
                    ┌─────────────┐
                    │     END     │
                    └─────────────┘
```

FIG. 10B

```
                    ┌──────────────────────────────┐
                    │            START             │
                    └──────────────────────────────┘
                                   │
                                   ▼
        ┌──────────────────────────────────────────┐
        │ SET ANGLE θ TO A PREDETERMINED VALUE      │   S31
        └──────────────────────────────────────────┘
                                   │
                                   ▼                     S32
                   RELIABILITY HIGHER THAN
                   PREDETERMINED VALUE?  ──────────────────────┐  No
                         │ Yes                                 │
                         ▼                                     ▼
        ┌──────────────────────────────┐       ┌──────────────────────────────────┐
        │  SET REFERENCE POINT USING    │       │ SET INSTALLED POSITION OF LIDAR  │
        │  DISTANCE dq, HIGHT h & ANGLE θ│  S34  │     TO REFERENCE POINT           │  S33
        └──────────────────────────────┘       └──────────────────────────────────┘
                         │                                     │
                         ▼◄────────────────────────────────────┘
        ┌──────────────────────────────┐
        │  STORE REFERENCE POINT THUS SET│   S35
        └──────────────────────────────┘
                         │
                         ▼
                    ┌──────────────────────────────┐
                    │             END              │
                    └──────────────────────────────┘
```

# FIG. 11A

FRONT
MARKER

BERTHING
PLACE

3

FENDER

REAR
MARKER

## FIG. 11B

FIG. 12

# FIG. 13A

FRONT
MARKER

● ···MPA

$x$

$y$

REAR
MARKER

FENDER

# FIG. 13B

FIG. 14

# FIG. 15A

FRONT
MARKER

●···MPB

$x$

$y$

REAR
MARKER

FENDER

FIG. 15B

EP 4 494 997 A1

FIG. 16A

FIG. 16B

## FIG. 17

START

S51
ACQUIRE POINT CLOUD DATA
IN DIRECTION OF BERTHING PLACE

S52
CALCULATE NORMAL VECTORS,
CALCULATE NUMBER & VARIANCE
OF NORMAL VECTORS

S53
IDENTIFY SURFACE WITHIN FIELD OF VIEW
& DETECTION SURFACE

S54
ACQUIRE PRESENT
FIRST REFERENCE POINT

S55
DETERMINE NEAREST POINT
FOR EACH VERTICAL LINE

S56
GENERATE BERTHING SIDE STRAIGHT LINE

S57
CALCULATE BERTHING PARAMETERS
(QUAY DISTANCE, APPROACH ANGLE,
BERTHING SPEED, ETC.)

S58
ACQUIRE PRESENT
SECOND REFERENCE POINT

S59
DETERMINE NEAREST POINT
FOR EACH VERTICAL LINE

S60
CALCULATE DISTANCE TO FENDER

S61
GENERATE RELIABILITY INFORMATION

S62
SET NEXT FIRST REFERENCE POINT

S63
SET NEXT SECOND REFERENCE POINT

S64
CONTROL SHIP BASED ON
RELIABILITY INFORMATION

S65
BERTHED ?   No → ①

Yes

END

FIG. 18

FRONT
MARKER

$L_m$

REAR
MARKER

FENDER

# FIG. 19A

FRONT
MARKER

91

FENDER

REAR
MARKER

92

## FIG. 19B

FIG. 19C

## FIG. 19D

START

S81
ENTER BERTHING AREA?

Yes — No

$\Delta d_{rf\_max}=0$   S82

CALCULATE QUAY DISTANCE $d_r$
& DISTANCE $d_f$   S83

CALCULATE
DIFFERENCE VALUE $\Delta d_{rf}$   S84

S85
$\Delta d_{rf} > \Delta d_{rf\_max}$ ?

Yes   S87   No   S86

UPDATE $\Delta d_{rf}$ TO $\Delta d_{rf\_max}$   MAINTAIN $\Delta d_{rf\_max}$

CALCULATE $d_{f\_min}$   S88

S89
BERTHED ?

Yes — No

END

FIG. 19E

FRONT
MARKER

$L$

$\Delta d_{rf\_max}$

$x$

FENDER

EWB

$d_{f\_min}$

$y$

$o$

REAR
MARKER

EP 4 494 997 A1

## INTERNATIONAL SEARCH REPORT

International application No.

**PCT/JP2023/008842**

### A. CLASSIFICATION OF SUBJECT MATTER

*B63B 79/40*(2020.01)i; *B63B 49/00*(2006.01)i; *B63B 79/10*(2020.01)i; *B63H 25/02*(2006.01)i; *B63H 25/04*(2006.01)i; *G01S 17/93*(2020.01)i
FI: B63B79/40; G01S17/93; B63B49/00 Z; B63B79/10; B63H25/04 D; B63H25/04 G; B63H25/02 Z

According to International Patent Classification (IPC) or to both national classification and IPC

### B. FIELDS SEARCHED

Minimum documentation searched (classification system followed by classification symbols)

B63B79/40; B63B49/00; B63B79/10; B63H25/02; B63H25/04; G01S17/93

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-83090 A (YANMAR CO., LTD.) 04 June 2020 (2020-06-04)<br>entire text, all drawings | 1-12 |
| A | RUESSMEIER, Nick, HAHN, Axel, NICKLAS, Daniela, ZIELINSKI, Oliver. A research port test bed based on distributed optical sensors and sensor fusion framework for ad hoc situational awareness. Journal of Sensors and Sensor Systems. 26 January 2017, vol. 6, issue 1, pages 37-52, DOI: 10.5194/jsss-6-37-2017, eISSN 2194-878X<br>particularly, pages 43-49 | 1-12 |
| A | JP 2021-71800 A (YANMAR POWER TECHNOLOGY CO., LTD.) 06 May 2021 (2021-05-06)<br>entire text, all drawings | 1-12 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

52

## INTERNATIONAL SEARCH REPORT

| | International application No. |
|---|---|
| | **PCT/JP2023/008842** |

**C.    DOCUMENTS CONSIDERED TO BE RELEVANT**

| Category* | Citation of document, with indication, where appropriate, of the relevant passages | Relevant to claim No. |
|---|---|---|
| A | 平山拓央, 森英男, 三菱造船の無人運航船プロジェクトについて - MEGURI2040 無人運航実証実験プロジェクト- 日本船舶海洋工学会誌 KANRIN(咸臨), January 2022, no. 100, pages 12-15, DOI: 10.14856/kanrin.100.0_12, ISSN 2424-161X (online), 1880-3725 (print), (Bulletin of the Japan Society of Naval Architects and Ocean Engineers KANRIN.), non-official translation (HIRAYAMA, Takuo, MORI, Hideo. About Mitsubishi Shipbuilding's Unmanned Ship Project -MEGURI2040 Unmanned Operation Demonstration Project-.) particularly, page 14 | 1-12 |
| A | JP 2021-181301 A (PORT & AIRPORT RESEARCH INST.) 25 November 2021 (2021-11-25) <br> entire text, all drawings | 1-12 |
| P, A | JP 2022-137867 A (PIONEER ELECTRONIC CORP.) 22 September 2022 (2022-09-22) <br> entire text, all drawings | 1-12 |
| P, A | JP 2022-139982 A (PIONEER ELECTRONIC CORP.) 26 September 2022 (2022-09-26) <br> entire text, all drawings | 1-12 |
| P, A | JP 2022-139986 A (PIONEER ELECTRONIC CORP.) 26 September 2022 (2022-09-26) <br> entire text, all drawings | 1-12 |

Form PCT/ISA/210 (second sheet) (January 2015)

**INTERNATIONAL SEARCH REPORT**
Information on patent family members

International application No.

**PCT/JP2023/008842**

| Patent document cited in search report | | | Publication date (day/month/year) | Patent family member(s) | | | Publication date (day/month/year) |
|---|---|---|---|---|---|---|---|
| JP | 2020-83090 | A | 04 June 2020 | US | 2022/0028278 | A1 | |
| | | | | WO | 2020/111040 | A1 | |
| | | | | EP | 3889030 | A1 | |
| JP | 2021-71800 | A | 06 May 2021 | WO | 2021/085274 | A1 | |
| | | | | EP | 4053822 | A1 | |
| JP | 2021-181301 | A | 25 November 2021 | WO | 2021/230356 | A1 | |
| | | | | CN | 115515851 | A | |
| JP | 2022-137867 | A | 22 September 2022 | (Family: none) | | | |
| JP | 2022-139982 | A | 26 September 2022 | (Family: none) | | | |
| JP | 2022-139986 | A | 26 September 2022 | (Family: none) | | | |

Form PCT/ISA/210 (patent family annex) (January 2015)

**EP 4 494 997 A1**

**Patent documents cited in the description**

- JP 2020059403 A

- WO 2019188745 A